# EUROPÄISCHE PATENTSCHRIFT

(11) **EP 1 027 955 B1**
(45) Veröffentlichungstag und Bekanntmachung des Hinweises auf die Patenterteilung: **28.04.2004**
(21) Anmeldenummer: 00102679.8
(22) Anmeldetag: 09.02.2000
(51) Int. Cl.: B23Q 37/00, B23Q 1/54, B23B 29/12, B23B 29/32

(54) **Werkzeugmaschine**
Machine tool
Machine-outil

(30) Priorität: 12.02.1999 DE 19905772; 12.03.1999 DE 19910953
(43) Veröffentlichungstag der Anmeldung: 16.08.2000
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: Hoeger, Stellrecht & Partner

(56) Entgegenhaltungen:
- EP-A- 0 538 515
- DE-A- 3 221 513
- DE-A- 4 417 398
- US-A- 5 765 456

## Beschreibung

Die Erfindung betrifft eine Werkzeugmaschine gemäß dem Oberbegriff des Anspruchs 1, wie z.B. aus der DE-A-3 221 513 bekannt.

Eine ähnliche Werkzeugmaschine ist beispielsweise aus der europäischen Patentanmeldung 0 538 515 bekannt.

Bei einer derartigen Werkzeugmaschine besteht das Problem, daß die Werkzeugspindelachse an der einen Revolver umfassenden Werkzeugträgeranordnung so angeordnet ist, daß bei Bearbeitung eines Werkstücks mit einem in der Werkzeugspindel sitzenden und von dieser rotierend angetriebenen Werkzeug, erhebliche Verfahrwege zur Bewegung des rotierend angetriebenen Werkzeugs in eine Bearbeitungsstellung und aus dieser heraus in eine Ruhestellung zu bewältigen sind.

Der Erfindung liegt daher die Aufgabe zugrunde, eine Werkzeugmaschine der gattungsgemäßen Art derart zu verbessern, daß die Verfahrwege verringert werden können.

Diese Aufgabe wird durch die Merkmale des Anspruchs 1 gelöst.

Der Vorteil der erfindungsgemäßen Lösung ist darin zu sehen, daß mit dem Vorsehen des verschwenkbaren Werkzeugspindelträgers die Möglichkeit besteht, das Lagergehäuse in ausreichend großem Abstand vom Werkstück zu positionieren und den Weg vom Lagergehäuse zum Werkstück hin durch Verschwenken des Werkstückspindelträgers relativ zum Lagergehäuse zu überbrücken, so daß einerseits eine allseitige Bearbeitung des Werkstücks mit dem rotierend angetriebenen Werkzeug möglich ist und andererseits die Möglichkeit besteht, durch Verschwenken des Werkzeugspindelträgers das rotierend angetriebene Werkzeug von dem Werkstück weg zu verschwenken, und zwar in eine Stellung, in welcher weder das rotierend angetriebene Werkzeug noch der Werkzeugspindelträger andere Bearbeitungsoperationen behindern, was insbesondere auch dadurch möglich ist, daß sich der Werkzeugspindelträger in einem Winkelbereich von weniger als 180° um die Schwenkachse erstreckt, wodurch die Möglichkeit geschaffen ist, den Werkzeugspindelträger so auszurichten, daß dieser sich mit keinem seiner Bereiche näher in Richtung des Werkstücks erstreckt, als das Lagergehäuse des Werkzeugträgers.

Dadurch ist bereits ohne die Bewegbarkeit des Lagergehäuses auszunutzen, eine einfache Möglichkeit geschaffen, einerseits mit dem rotierend angetriebenen Werkzeug alle gewünschten Bearbeitungen am Werkstück durchführen zu können und andererseits das rotierend angetriebene Werkzeug problemlos in eine Stellung zu bringen, in welcher dieses weitere Bearbeitungen nicht behindert, ohne daß eine Bewegung des Lagergehäuses über große Distanzen erforderlich ist, wie dies beim eingangs beschriebenen Stand der Technik der Fall ist.

Eine noch vorteilhaftere Lösung sieht dabei vor, daß sich der Werkzeugspindelträger in einem Winkelbereich von weniger als 120°, noch besser weniger als 90°, um die Schwenkachse herum erstreckt, so daß dadurch bereits durch eine noch geringere Drehung des Werkzeugspindelträgers um die Schwenkachse eine Stellung erreichbar ist, in welcher der Werkzeugspindelträger dem Werkstück nicht näher kommt, als das Lagergehäuse.

Um insbesondere Werkzeugspindeln einsetzen zu können, die eine große Zerspanungsleistung zur Verfügung stellen, ist vorzugsweise vorgesehen, daß der Werkzeugspindelträger ein die Werkzeugspindel lagerndes Werkzeugspindelgehäuse umfaßt, welches ein integraler Abschnitt des Werkzeugspindelträgers ist. Dies heißt, daß das Werkzeugspindelgehäuse ein Teil des Werkzeugspindelträgers ist und nicht dazu gedacht ist, wie beispielsweise ein Werkzeughalter, auswechselbar mit dem Werkzeugspindelträger verbunden zu sein.

Durch die Integration des Werkzeugspindelgehäuses in den Werkzeugspindelträger läßt sich eine einerseits raumsparende und andererseits stabile Aufnahme für die Werkzeugspindel, insbesondere eine Werkzeugspindel für große Zerspanungsleistungen, schaffen.

Hinsichtlich der Ausbildung des Werkzeugspindelträgers selbst wurden bislang keine näheren Angaben gemacht. So sieht ein vorteilhaftes Ausführungsbeispiel vor, daß der Werkzeugspindelträger einen von der Schwenkachse durchsetzten Lagerkopf, einen sich vom Lagerkopf weg erstreckenden Arm und ein mit dem Arm verbundenes Werkzeugspindelgehäuse umfaßt. Eine derartige Lösung hat insbesondere aufgrund ihres raumsparenden Aufbaus große Vorteile.

Insbesondere ist die Lösung dann besonders raumsparend, wenn sich der Arm des Werkzeugspindelträgers ausschließlich zwischen dem Werkzeugspindelgehäuse und dem Lagerkopf erstreckt, d. h. lediglich eine Verbindung zwischen diesen herstellt und sich nicht seitwärts über diese hinaus erstreckt. Diese Lösung ist die raumsparendste Lösung.

Es ist aber auch denkbar, den Werkzeugspindelträger derart auszubilden, daß sich der Arm von dem Lagerkopf zum Werkzeugspindelgehäuse und auch noch zu einer oder mehreren zusätzlichen Werkzeugaufnahmen erstreckt, die beispielsweise in einem Winkelabstand zu dem Werkzeugspindelgehäuse angeordnet sind. Diese weiteren Werkzeugaufnahmen können ebenfalls weitere Werkzeugspindelgehäuse sein. Es ist aber auch denkbar, diese Aufnahmen als einfache Aufnahmen für feststehende Werkzeuge auszubilden.

Hinsichtlich der Festlegbarkeit des Werkzeugspindelträgers relativ zum Lagergehäuse wurde bislang lediglich davon ausgegangen, daß mindestens eine Bearbeitungsstellung vorgesehen ist, so daß der Werkzeugspindelträger beispielsweise beim Vorsehen einer Werkzeugspindel in einer Bearbeitungsstellung relativ zu dieser festlegbar ist und darüber hinaus in eine Ruhestellung bewegbar ist, in der jedoch nicht zwingend eine momentenstabile Fixierung erforderlich ist.

Noch vorteilhafter ist es jedoch, das der Werkzeugspindelträger in mindestens zwei Bearbeitungsstellungen gegenüber dem Lagergehäuse festlegbar ist, da diese zwei Bearbeitungsstellungen dazu ausgenutzt werden können, in einfacher Weise und insbesondere bei Vermeidung großer Verfahrwege bei der Bewegung der Werkzeugträgeranordnung relativ zum Werkstück einer Werkstückaufnahme alle möglichen Bearbeitungen durchzuführen, wobei in einer Bearbeitungsstellung die Werkzeugspindelachse sich in Ebenen bewegt, die die Achse schneiden und mit dieser einen Winkel von weniger als 45° einschließen, während in der anderen Bearbeitungsstellung die Werkzeugspindelachse in all den Ebenen steht, die die Achse schneiden und mit dieser einen Winkel von mehr als 45° einschließen.

Besonders günstig lassen sich diese zwei vorgesehenen Bearbeitungsstellungen dann anordnen, wenn diese auf gegenüberliegenden Seiten einer durch die Schwenkachse verlaufenden Symmetrieebene angeordnet sind. Dabei ist es nicht zwingend notwendig, die Bearbeitungsstellungen in einem Winkelabstand von ungefähr 180° voneinander vorzusehen. Die erfindungsgemäßen Vorteile können auch bei geringeren Winkelabständen auftreten. Besonders günstig ist es jedoch, um das Werkzeug bei möglichst großem Abstand zwischen Werkstück und Lagergehäuse überall am Werkstück einsetzen zu können, wenn die mindestens zwei Bearbeitungsstellungen um ungefähr 180° gegeneinander um die Schwenkachse verdreht angeordnet sind.

Es wäre zwar prinzipiell denkbar, den Werkzeugspindelträger so anzuordnen, daß er um mehr als eine Umdrehung um die Schwenkachse drehbar ist. Dies hätte jedoch konstruktiv zur Folge, daß der Werkzeugspindelträger und insbesondere die Anordnung der Werkzeugspindel so gewählt werden müßten, daß diese an dem Lagergehäuse vorbei bewegbar sind, was wiederum einen großen Bauraum für den gesamten Werkzeugträger zur Folge hätte. Aus diesem Grund ist vorzugsweise vorgesehen, daß der Werkzeugspindelträger um weniger als eine Umdrehung um die Schwenkachse drehbar ist.

Eine besonders günstige Lösung sieht vor, daß der Werkzeugspindelträger um die Schwenkachse um einen Winkel von maximal 270°, noch besser maximal 240°, schwenkbar ist, so daß der Werkzeugspindelträger mit dem Werkzeugspindelgehäuse so ausgeführt werden kann, daß der Bauraum für den gesamten Werkzeugträger möglichst gering ist.

Hinsichtlich der Festlegung des Werkzeugspindelträgers an dem Lagergehäuse wurden im Zusammenhang mit der bisherigen Erläuterung der einzelnen Ausführungsbeispiele keine näheren Angaben gemacht. So wäre es beispielsweise denkbar, einen Schwenkantrieb vorzusehen und einfach über den stillgesetzten Schwenkantrieb den Werkzeugspindelträger relativ zum Lagergehäuse zu fixieren. Besonders günstig ist es jedoch, wenn der Werkzeugspindelträger mit einer Fixiereinrichtung am Lagergehäuse festlegbar ist, so daß die Fixierung des Werkzeugspindelträgers relativ zum Lagergehäuse unabhängig vom Drehantrieb desselben erfolgen kann.

Insbesondere ist es in diesem Fall möglich, den Antrieb für die Werkzeugspindel auch zum Antreiben der Schwenkbewegung des Werkzeugspindelträgers relativ zum Lagergehäuse einzusetzen, so daß nur ein Antrieb für die Werkzeugspindel und die zur Durchführung der jeweils erforderlichen Schwenkbewegung des Werkzeugspindelträgers erforderlich ist, was insbesondere sich vorteilhaft auf die konstruktive Einfachheit der Lösung auswirkt und außerdem auf die Baugröße einer derartigen Lösung.

Hinsichtlich der Festlegung des Werkzeugspindelträgers relativ zum Lagergehäuse wäre prinzipiell auch eine kraftschlüssige Festlegung denkbar, die den Vorteil hätte, daß eine beliebige Festlegung des Werkzeugspindelträgers relativ zum Lagergehäuse im Rahmen des erlaubten Schwenkbereichs möglich wäre.

Als besonders vorteilhaft, insbesondere hinsichtlich einer stabilen relativen Fixierung des Werkzeugspindelträgers relativ zum Lagergehäuse, hat es sich jedoch erwiesen, wenn mit der Fixiereinrichtung der Werkzeugspindelträger formschlüssig am Lagergehäuse festlegbar ist. Diese formschlüssige Festlegung relativ zum Lagergehäuse hat auch noch den weiteren Vorteil, daß damit eine hohe Präzision hinsichtlich der Positionierung des Werkzeugspindelträgers relativ zum Lagergehäuse erreichbar ist.

Vorzugsweise ist dabei die Fixiereinrichtung so ausgebildet, daß sie ineinandergreifende Verzahnungen umfaßt.

Hinsichtlich der Anordnung der Werkzeugspindelachse relativ zur Schwenkachse wurden im Zusammenhang mit der bisherigen Erläuterung der einzelnen Ausführungsbeispiele keine näheren Angaben gemacht. Beispielsweise wäre es denkbar, daß die Werkzeugspindelachse und die Schwenkachse windschief zueinander verlaufen. Es wäre beispielsweise möglich, die Werkzeugspindelachse in Ebenen auszurichten, die zwar die Schwenkachse schneiden, jedoch einen Winkel mit dieser einschließen.

Beispielsweise wäre es denkbar, die Werkzeugspindelachse in einer Ebene zu positionieren, die senkrecht zur Schwehkachse steht.

Noch günstigere Anordnungen lassen sich jedoch erreichen, wenn die Werkzeugspindelachse in einer Ebene liegt, welche die Schwenkachse in einem Winkel von weniger als 90° schneidet. Noch vorteilhafter ist es, wenn die Ebene die Schwenkachse in einem Winkel von ungefähr 45° oder weniger als 45° schneidet.

Hinsichtlich des Aufwandes zur Positionierung der Werkzeugspindelachse relativ zur Schwenkachse ist es besonders günstig, wenn die Werkzeugspindelachse und die Schwenkachse gemeinsam eine Ebene aufspannen, d. h. die Werkzeugspindelachse und die Schwenkachse nicht windschief relativ zueinander verlaufen.

Ein besonders vorteilhafter Fall dieser Lösung sieht vor, daß die Schwenkachse und die Werkzeugspindelachse parallel zueinander verlaufen. Bei dieser Lösung läßt sich ein Antrieb für die Werkzeugspindel besonders einfach über eine zur Schwenkachse koaxiale Antriebswelle und ein Ketten-, Riemen- oder Stirnradgetriebe realisieren.

Hinsichtlich der Positionierung des Lagergehäuses relativ zum Maschinengestell wurden im Zusammenhang mit der bisherigen Erläuterung der einzelnen Ausführungsbeispiele keine detaillierten Angaben gemacht.

Beispielsweise ist jede Lösung denkbar, mit welcher eine geeignete Positionierung der Werkzeugspindelachse relativ zum Werkstück möglich ist. Hierunter fallen beispielsweise auch Positioniervorrichtungen für die Werkzeugträgeranordnung, welche nach dem Konzept sogenannter Tripods arbeiten.

Als besonders vorteilhaft hat sich jedoch die erfindungsgemäße Lösung dann erwiesen, wenn die Werkzeugträgeranordnung mit konventionellen Positionierbewegungen relativ zum Werkstück positionierbar ist.

So ist es besonders günstig, das die Werkzeugträgeranordnung um eine B-Achse drehbar ist und sich die Schwenkachse quer zur B-Achse erstreckt.

Eine derartige B-Achse wird dabei üblicherweise als eine Dreh- oder Schwenkachse bezeichnet, welche quer zu der Achse verläuft, um welche das Werkstück durch Drehung positionierbar ist und welche insbesondere quer zu einer Zerspanungsebene bei einer konventionellen Drehbearbeitung verläuft.

Erfindungsgemäß ist das Lagergehäuse der Werkzeugträgeranordnung um die B-Achse drehbar.

Hinsichtlich der Positionierung des Werkzeugspindelträgers relativ zu der B-Achse sind mehrere Möglichkeiten denkbar. Beispielsweise wäre es denkbar, den Werkzeugspindelträger so anzuordnen, daß die B-Achse in einer Mittelebene des Werkzeugspindelträgers verläuft.

Als besonders günstig hinsichtlich der Positionierung des Werkzeugspindelträgers relativ zum Werkstück hat sich jedoch eine Lösung erwiesen, bei welcher der Werkzeugspindelträger sich seitlich neben der B-Achse erstreckt. Besonders zweckmäßig ist es dabei, wenn der Werkzeugspindelträger neben einer Seitenwand des Lagergehäuses liegt.

Dabei könnte der Werkzeugspindelträger noch in einem Winkel zur Schwenkachse verlaufen. Besonders zweckmäßig ist es jedoch zum Positionieren der Werkzeugspindel relativ zum Werkstück, wenn sich der Werkzeugspindelträger in allen Schwenkstellungen in einer senkrecht zur Schwenkachse liegenden Ebene erstreckt.

Vorzugsweise verläuft dabei die Ebene parallel zur B-Achse.

Hinsichtlich der Bewegungen der Werkzeugträgeranordnung ist günstiger Weise vorgesehen, daß dieser in Richtung einer Y-Achse bewegbar ist. Dabei könnte die Bewegung in Richtung der Y-Achse durch eine Kombination zweier Bewegungen erfolgen. Besonders günstig ist es jedoch, wenn die Werkzeugträgeranordnung linear in Richtung der Y-Achse bewegbar ist, wobei hierzu vorzugsweise ein Schlitten für die Erzeugung der Linearbewegung vorgesehen ist.

Hinsichtlich der Kombination der B-Achse und der Bewegbarkeit des Werkzeugträgers in Y-Richtung ist es grundsätzlich möglich, die Realisierung beider Bewegungsmöglichkeiten unabhängig voneinander zu gestalten. Hinsichtlich des Raumbedarfs ist es jedoch von Vorteil, wenn ein mit seiner Längsachse sich parallel zur B-Achse erstreckender Arm den in Y-Richtung bewegbaren Schlitten bildet.

Vorzugsweise ist dabei die Längsachse des Arms so ausgebildet, daß sie die Drehachse für die Bewegung um die B-Achse darstellt.

Insbesondere ist dabei der Arm so ausgebildet, daß er an einem Ende das Lagergehäuse trägt und somit das Lagergehäuse einerseits in Y-Richtung bewegbar und andererseits um die B-Achse drehbar ist.

Ferner ist im Rahmen der erfindungsgemäßen Lösung vorgesehen, daß die Werkzeugträgeranordnung in Richtung einer Z-Achse bewegbar ist, wobei die Bewegung in Richtung der Z-Achse grundsätzlich durch zwei überlagerte Bewegungen erreichbar wäre. Besonders vorteilhaft ist es jedoch hinsichtlich der Positionierung für die Bearbeitung, wenn die Werkzeugträgeranordnung durch eine Linearbewegung in der Z-Richtung bewegbar ist, beispielsweise durch Vorsehen eines in Z-Richtung bewegbaren Schlittens.

Ferner ist es vorteilhaft, wenn die Werkzeugträgeranordnung in Richtung einer X-Achse bewegbar ist, wobei auch diese durch eine Überlagerung zweier Bewegungen erzeugbar wäre, es ist jedoch besonders vorteilhaft, wenn die Werkzeugträgeranordnung linear in Richtung der X-Achse bewegbar ist, d. h. beispielsweise durch einen Schlitten.

Hinsichtlich der Konzeption der erfindungsgemäßen Werkzeugmaschine wurde im Rahmen der bislang dargelegten Ausführungsbeispiele lediglich darauf abgestellt, daß die Werkstückaufnahme um eine Achse drehbar sein soll, um eine Positionierung der Werkzeugspindeln relativ zum Werkstück in allen gewünschten Stellungen zu erreichen. Besonders günstig ist es jedoch, wenn die Werkzeugmaschine als Drehmaschine ausgebildet ist und die Werkstückaufnahme als Werkstückspindel ausgebildet ist, mit welcher konventionelle Drehbearbeitungen möglich sind, und wenn die Werkstückspindel in bestimmten Drehstellungen festlegbar ist, um die Bearbeitungen des Werkstücks mit dem rotierenden Werkzeug durchführen zu können.

Dabei ist das Festlegen der Werkstückspindel in bestimmten Drehstellungen für bestimmte ausgewählte Bearbeitungen des Werkstücks mit einem rotierenden Werkzeug ausreichend. Soll jedoch die Werkzeugmaschine so einsetzbar sein, daß sie alle möglichen Bearbeitungen bei unterschiedlichen Werkstücken und unterschiedlichen Werkstückgeometrien ermöglichen soll, so ist vorzugsweise vorgesehen, daß die Werkstückspindel mittels einer C-Achse numerisch gesteuert drehbar und somit auch numerisch gesteuert in bestimmten Drehstellungen festlegbar ist.

Insbesondere im Fall der erfindungsgemäßen Werkzeugmaschine als Drehmaschine hat es sich als besonders vorteilhaft erwiesen, wenn an dem Lagergehäuse noch zusätzlich ein Werkzeugträger angeordnet ist.

Vorzugsweise ist der zusätzliche Werkzeugträger auf einer dem Werkzeugspindelträger gegenüberliegenden Seite des Lagergehäuses angeordnet.

Hinsichtlich der Ausbildung dieses Werkzeugträgers sind ebenfalls alle möglichen Lösungen denkbar. Beispielsweise könnte der zusätzliche Werkzeugträger ein relativ zum Lagergehäuse feststehender Werkzeugträger sein. Besonders günstig ist es jedoch, um mehrere Werkzeuge günstig einsetzen zu können, wenn der zusätzliche Werkzeugträger um eine Schwenkachse schwenkbar ist.

Diese Schwenkachse des zusätzlichen Werkzeugträgers könnte ebenfalls grundsätzlich beliebig angeordnet sein. Besonders zweckmäßig ist es jedoch, wenn die Schwenkachse des zusätzlichen Werkzeugträgers parallel zur Schwenkachse des Werkzeugspindelträgers, vorzugsweise koaxial zu dieser angeordnet ist.

Insbesondere ist es vorteilhaft im Rahmen der erfindungsgemäßen Lösung, wenn der zusätzliche Werkzeugträger als Werkzeugrevolver ausgebildet ist. Werden an dem Werkzeugrevolver rotierend angetriebene Werkzeuge eingesetzt, so ist deren Zerspanungsleistung aufgrund der Raumverhältnisse kleiner als die der rotierend angetriebenen Werkzeuge in der Werkzeugspindel des Werkzeugspindelträgers. Vorzugsweise ist die Zerspanungsleistung der Werkzeuge des Werkzeugspindelträgers mindestens 3 mal so groß wie die der am Revolver angeordneten rotierend angetriebenen Werkzeuge, vorzugsweise mindestens ungefähr 5 mal so groß.

Insbesondere im Fall eines zusätzlich am Lagergehäuse angeordneten Werkzeugrevolvers hat die erfindungsgemäße Lösung den großen Vorteil, daß durch die Verschwenkbarkeit des Werkzeugspindelträgers für das rotierend angetriebene Werkzeug das rotierend angetriebene Werkzeug einerseits mit relativ begrenzten Achsbewegungen der Werkzeugträgeranordnung zur Bearbeitung eingesetzt werden kann, andererseits das rotierend angetriebene Werkzeug aber in einfacher Weise in eine Position gebracht werden kann, in welcher eine ungehinderte Bearbeitung eines Werkstücks mit dem zusätzlichen Werkzeugträger möglich ist.

Ferner lassen sich die Achsbewegungen für die Bearbeitung des Werkstücks mit dem zusätzlichen Werkzeugträger und mit dem rotierend angetriebenen Werkzeug am Werkzeugspindelträger besonders günstig dann mit minimalen Achsbewegungen lösen, wenn in der Bearbeitungsstellung der Abstand des rotierend angetriebenen Werkzeugs und der Abstand von im zusätzlichen Werkzeugträger angeordneten Werkzeugen von der Spindelachse der Werkstückspindel ungefähr gleich groß ist.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: einen Schnitt durch eine erfindungsgemäße Werkzeugmaschine längs Linie 1-1 in Fig. 2;
- Fig. 2: einen Schnitt längs Linie 2-2 in Fig. 1;
- Fig. 3: eine ausschnittsweise vergrößerte Darstellung einer zweiten Bearbeitungsstellung eines erfindungsgemäßen Werkzeugspindelträgers mit rotierend angetriebenem Werkzeug mit senkrecht zur Spindelachse ausgerichteter Werkzeugspindelachse;
- Fig. 4: eine ausschnittsweise vergrößerte Darstellung einer ersten Bearbeitungsstellung ähnlich Fig. 3;
- Fig. 5: eine Draufsicht auf die erste Bearbeitungsstellung in Richtung des Pfeils A in Fig. 3;
- Fig. 6: eine Draufsicht ähnlich Fig. 5 auf eine weitere Bearbeitungsstellung des erfindungsgemäßen Werkzeugspindelträgers in einer um einen Winkel gegenüber der ersten Bearbeitungsstellung geschwenkten Bearbeitungsstellung;
- Fig. 7: eine Darstellung ähnlich Fig. 3 einer Bearbeitung eines Werkstücks mit in der zweiten Bearbeitungsstellung stehendem Werkzeugspindelträger mit ungefähr zur Spindelachse paralleler Werkzeugspindel;
- Fig. 8: eine Darstellung ähnlich Fig. 7 bei in der ersten Bearbeitungsstellung stehendem Werkzeugspindelträger zur Bearbeitung eines Werkstücks;
- Fig. 9: eine Darstellung ähnlich Fig. 7 bei Einsatz eines weiteren rotierenden Werkzeugs;
- Fig. 10: eine Darstellung ähnlich Fig. 8 bei Einsatz eines weiteren rotierenden Werkzeugs;
- Fig. 11: eine Darstellung einer Bearbeitung ähnlich Fig. 9 bei gegenüber der Spindelachse um einen Winkel geneigter Werkzeugspindelachse;
- Fig. 12: eine Darstellung einer Bearbeitung ähnlich Fig. 10 mit einer um einen Winkel gegenüber der Spindelachse geneigten Werkzeugspindelachse;
- Fig. 13: eine Darstellung einer Variante des ersten Ausführungsbeispiels mit einem Werkzeugmagazin;
- Fig. 14: eine Darstellung ähnlich Fig. 4 bei Einsatz eines feststehenden Werkzeugs;
- Fig. 15: eine Darstellung ähnlich Fig. 7 bei Einsatz eines feststehenden Werkzeugs;
- Fig. 16: eine Darstellung ähnlich Fig. 7 eines zweiten Ausführungsbeispiels einer erfindungsgemäßen Werkzeugmaschine mit einem zusätzlichen als Revolver ausgebildeten Werkzeugträger;
- Fig. 17: eine Darstellung einer Bearbeitung eines Werkstücks mit einem im Revolver angeordneten Werkzeug und in Ruhestellung stehendem Werkzeugspindelträger;
- Fig. 18: eine Darstellung eines dritten Ausführungsbeispiels einer erfindungsgemäßen Werkzeugmaschine bei einer Bearbeitung ähnlich Fig. 16 und in kollisionsfreier Stellung des Revolvers;
- Fig. 19: eine Darstellung einer Bearbeitung ähnlich Fig. 4 beim dritten Ausführungsbeispiel mit in kollisionsfreier Stellung stehendem Revolver;
- Fig. 20: eine Darstellung einer Bearbeitung des Werkstücks beim dritten Ausführungsbeispiel mit in kollisionsfreier Stellung stehender Werkzeugspindel und in Bearbeitungsstellung stehendem Revolver;
- Fig. 21: eine Darstellung eines vierten Ausführungsbeispiels mit einem erfindungsgemäßen Werkzeugspindelträger, welcher zwei Werkzeuge trägt und
- Fig. 22: eine Schnittansicht längs Linie 22-22 in Fig. 21 mit zusätzlicher Darstellung der Werkzeuge relativ zu den Werkstückspindeln.

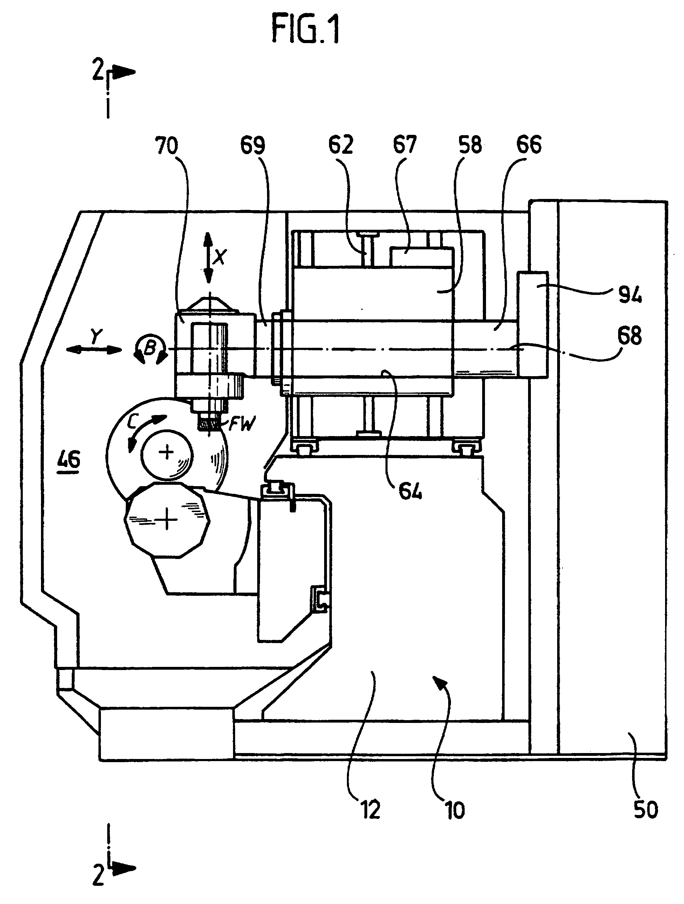

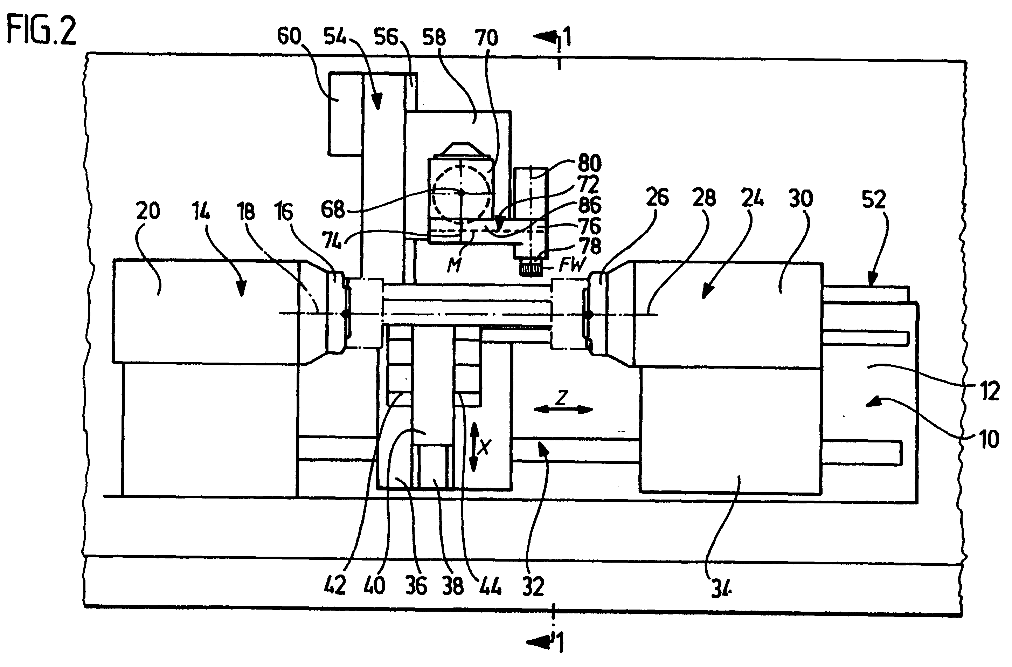

Ein in Fig. 1 und 2 dargestelltes erstes Ausführungsbeispiel einer erfindungsgemäßen Drehmaschine weist ein Maschinengestell 10 auf, welches ein Maschinenbett 12 umfaßt. Am Maschinenbett 12 ist ein erster Spindelkasten 14 feststehend angeordnet, in welchem eine ein erstes Werkstück W1 aufnehmende erste Werkstückspindel 16 um eine Spindelachse 18 drehbar gelagert ist, wobei die erste Spindel 16 durch einen ersten Spindelantrieb 20 antreibbar ist. Ferner ist an dem Maschinenbett 12 ein zweiter Spindelkasten 24 mit einer ein zweites Werkstück W2 aufnehmenden zweiten Werkstückspindel 26 drehbar gelagert, wobei die zweite Werkstückspindel 26 mit ihrer Spindelachse 28 koaxial zur Spindelachse 18 angeordnet ist. Ferner ist der zweite Spindelkasten 24 längs einer als Ganzes mit 32 bezeichneten ersten Z-Führung des Maschinenbetts 12 in einer parallel zu den Spindelachsen 18 verlaufenden Z-Richtung verfahrbar, um ein Werkstück W1 aus der ersten Werkstückspindel 16 entnehmen oder dieser übergeben zu können, und sitzt hierbei auf einem in der Z-Richtung verschiebbaren Z-Schlitten 34.

Auf der ersten-Z-Führung 32 ist noch ein weiterer Z-Schlitten 36 angeordnet, welcher mit einer X-Führung 38 versehen ist, welche längs einer sich senkrecht zur Spindelachse 18 erstreckenden X-Richtung verläuft. Auf dieser X-Führung 38 sitzt ein Revolverträger 40, an welchem beispielsweise beiderseits jeweils einen Werkzeugrevolver 42, 44 angeordnet ist, wobei beispielsweise der Werkzeugrevolver 42 zur Bearbeitung des Werkstücks W1 in der ersten Werkstückspindel 16 und der Revolver 44 zur Bearbeitung des Werkstücks W2 in der zweiten Werkstückspindel 26 vorgesehen ist.

Mit auf diesen Werkzeugrevolvern angeordneten Werkzeugen erfolgt eine Bearbeitung der Werkstücke W1 und W2 in einem Arbeitsraum 46 der Drehmaschine, gesteuert durch eine Steuerung 50.

Parallel zur ersten Z-Führung 32 ist an dem Maschinenbett 12 noch eine zweite Z-Führung 52 vorgesehen, auf welcher ein Z-Schlitten 54 parallel zur Z-Richtung verschiebbar angeordnet ist. Der Z-Schlitten 54 trägt seinerseits wiederum eine X-Führung 56, auf welcher ein X-Schlitten 58 verschiebbar angeordnet ist, wobei zur Verschiebung des X-Schlittens 58 in X-Richtung ein X-Achsenantrieb 60 am Z-Schlitten 54 vorgesehen ist, welcher, wie beispielsweise in Fig. 1 dargestellt, über eine Gewindespindel 62 den X-Schlitten 58 in der X-Richtung verschiebt. In dem X-Schlitten 58 ist eine Y-Führung vorgesehen, welche sich längs einer senkrecht zur X-Richtung verlaufenden Y-Richtung erstreckt und in welcher ein als zylindrischer Körper 66 mit einer sich in Y-Richtung erstreckenden Zylinderachse 68 ausgebildeter Y-Schlitten gelagert ist.

Ferner ist der zylindrische Körper 66, auch als Pinole bezeichnet, um die Zylinderachse 68 numerisch gesteuert drehbar, so daß eine Drehung um die Zylinderachse 68 in Form einer numerisch gesteuerten B-Achse erfolgt.

Das Verschieben des zylindrischen Körpers 66 in Richtung der Y-Achse und das Drehen desselben um die B-Achse erfolgt durch eine hierzu vorgesehene Antriebseinheit 67, welche an dem X-Schlitten 58 angeordnet ist.

Der zylindrische Körper 66 trägt an seinem in den Arbeitsraum 46 hineinragenden vorderen Ende 69 ein Lagergehäuse 70, an welchem ein Werkzeugspindelträger 72 um eine Schwenkachse 74 verschwenkbar gelagert ist. Der Werkzeugspindelträger 72 erstreckt sich dabei in radialer Richtung zur Schwenkachse 74 bis zu einem Werkzeugspindelgehäuse 76, in welchem eine Werkzeugspindel 78 gelagert ist, die um eine Werkzeugspindelachse 80 rotierend antreibbar ist.

An der Werkzeugspindel 78 ist ein rotierendes Werkzeug montierbar, welches beispielsweise als Fräswerkzeug FW ausgebildet ist.

Vorzugsweise umfaßt der Werkzeugspindelträger einen Lagerkopf 82, welcher von der Schwenkachse 74 durchsetzt ist, neben einer Seitenfläche 83 des Lagergehäuses 70 liegt und vorzugsweise mit einer Anlagefläche 84 an diese anlegbar ist.

Ausgehend von dem Lagerkopf 82 erstreckt sich ein sich an den Lagerkopf 82 anschließender Arm 86 zu dem Werkzeugspindelgehäuse 76, das von dem Arm 86 getragen ist und dessen beispielsweise vorderer Gehäuseabschnitt 88 an den Arm 86 angeformt ist, während ein hinterer Gehäuseabschnitt 90 des Werkzeugspindelgehäuses 76 an dem vorderen Gehäuseabschnitt 88 gehalten ist. Dennoch bilden beide Gehäuseabschnitte 88 und 90 des Werkzeugspindelgehäuses einen integralen Bestandteil des Werkzeugspindelträgers 72, in welchem die Werkzeugspindel 78 fest angeordnet ist, d. h. für einen Betreiber der Werkzeugmaschine nicht im Rahmen des Bestückens derselben mit rotierenden Werkzeugen FW auswechselbar ist.

Zur Festlegung des Werkzeugspindelträgers 72 in einzelnen Bearbeitungsstellungen ist der Lagerkopf 82 mittels einer als Ganzes mit 92 bezeichneten Fixiereinrichtung fixierbar, welche beispielsweise als HIRTH-Verzahnung ausgebildet ist, die zwischen dem Lagerkopf 82 und dem Lagergehäuse 70 wirksam ist und eine formschlüssige und präzise Festlegung des Werkzeugspindelträgers 72 erlaubt.

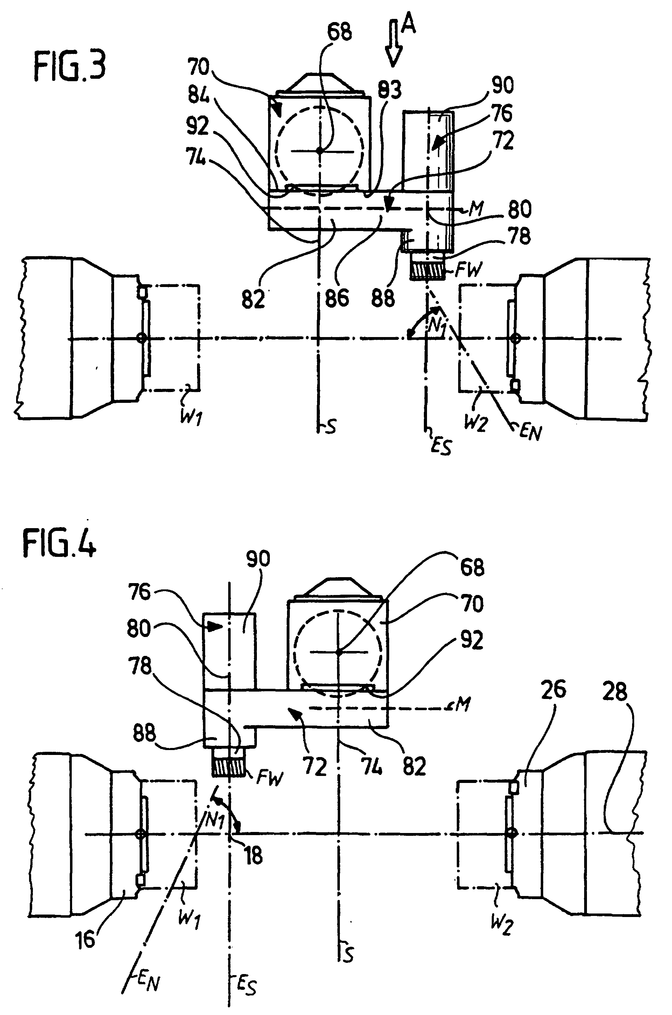

Bei dem ersten Ausführungsbeispiel des erfindungsgemäßen Werkzeugspindelträgers 72 ist das Werkzeugspindelgehäuse 76 so in diesen integriert, daß die Werkzeugspindelachse 80 parallel zur Schwenkachse 74 ausgerichtet ist, so daß, wie in Fig. 3 bis 4 dargestellt, die Schwenkachse 74 und die Werkzeugspindelachse 80 in einer Ebene E1 liegen, welche allerdings mit der Schwenkbewegung des Werkzeugspindelträgers 72 um die Schwenkachse 74 mitverschwenkbar ist.

Darüber hinaus ist der Arm 86 des Werkzeugspindelträgers 72 beim ersten Ausführungsbeispiel so am Lagerkopf 82 gehalten, daß eine Mittelebene M des Arms 86, welche die Schwenkachse 74 schneidet, senkrecht auf dieser steht und somit in allen Drehstellungen des Arms 86 die Mittelebene M in ihrer Ausrichtung zur Schwenkachse 74 erhalten bleibt.

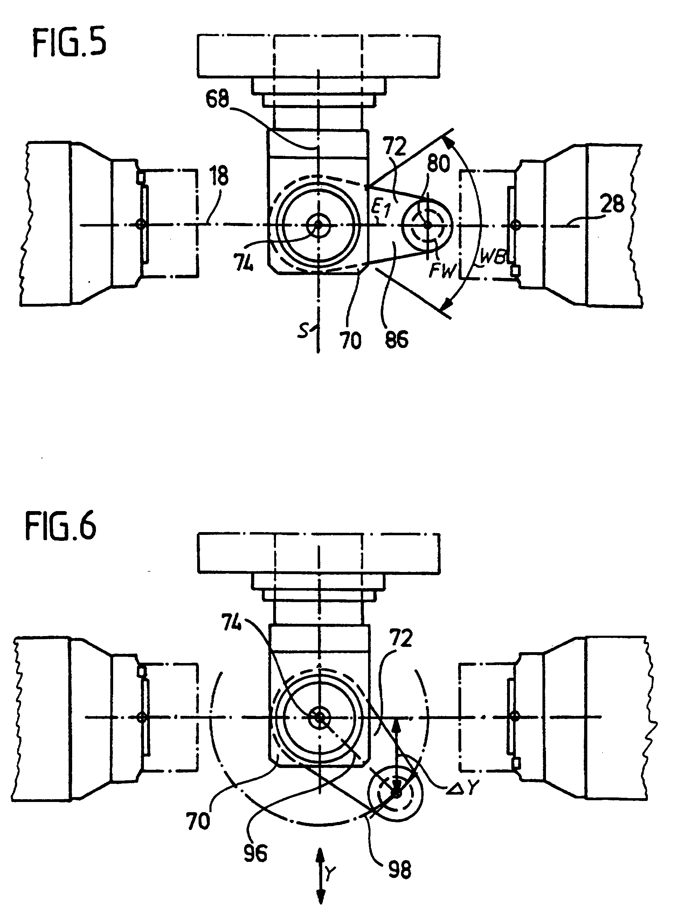

Wie in Fig. 5 dargestellt, ist der Arm 86 so ausgebildet, daß er bezüglich der Schwenkachse 74 mit seinem sich über das Lagergehäuse 70 hinaus erstreckenden Abschnitt innerhalb eines Winkelbereichs WB um die Schwenkachse 74 herum erstreckt, welcher kleiner als 90° ist.

Vorzugsweise liegt die Mittelebene M relativ zur B-Achse 68 noch so, daß die B-Achse parallel zur Mittelebene M, jedoch im Abstand von dieser verläuft.

Wie in Fig. 2 bis 4 dargestellt, erlaubt ein Schwenken des Werkzeugspindelträgers 72 um die Schwenkachse 74 ein Verlagern der Werkzeugspindel 78 dergestalt, daß die Werkzeugspindelachse 80 von einer Seite einer durch die B-Achse 68 und die Schwenkachse 74 aufgespannten Ebene S (Fig. 3) auf die andere Seite der Ebene S (Fig. 4) bewegbar ist, wobei beispielsweise jeweils eine Bearbeitung mittels des Fräswerkzeugs FW entweder in einer ersten Bearbeitungsstellung an einem Werkstück W1, das in der ersten Werkstückspindel 16 eingespannt und gehalten ist (Fig. 4), oder in einer zweiten Bearbeitungsstellung an einem Werkstück W2, das in der zweiten Werkstückspindel 26 gehalten ist (Fig. 3), erfolgen kann.

Dabei sind in den in Fig. 3 und 4 dargestellten Bearbeitungsstellungen die Werkzeugspindelachsen 80 so angeordnet, daß sie in Ebenen E_{S} liegen, die senkrecht zu den Spindelachsen 18 bzw. 28 verlaufen. Es ist aber auch denkbar, die Werkzeugspindelachsen 80 in gegenüber den Ebenen E_{S} in Richtung der Spindelachsen 18, 28 geneigten Ebenen E_{N} anzuordnen, wobei die Ebenen E_{N} mit den Spindelachsen 18 bzw. 28 vorzugsweise um Neigungswinkel N1 geneigt sind, die kleiner 90° sind und vorzugsweise bis ungefähr 45°. Dabei bezieht sich die Angabe für den Neigungswinkel N1 auf den jeweils kleinsten Winkel zwischen der jeweiligen Ebene E_{N} und den Spindelachsen 18, 28, so daß damit auch bei Betrachtung des Winkels in nur einer Richtung Winkel von ungefähr 90° bis ungefähr 135° erfaßt sind.

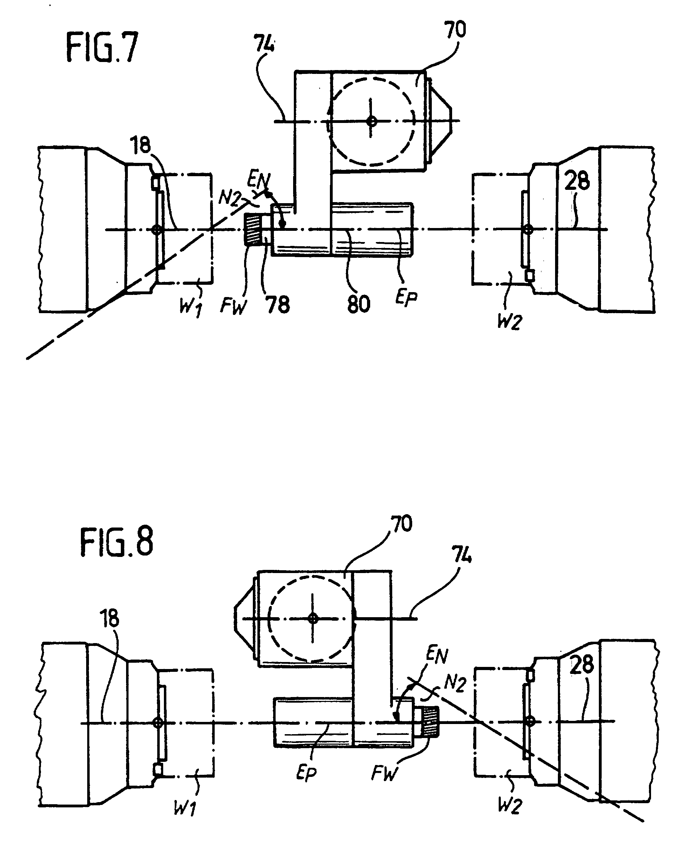

Die zweite Bearbeitungsstellung der Werkzeugspindel 78 kann aber auch, wie in Fig. 7 dargestellt, dazu eingesetzt werden, am Werkstück W1 eine Bearbeitung mit einer Anordnung der Werkzeugspindelachse 80 in parallel zur Spindelachse 18 verlaufenden Ebenen E_{P} durchzuführen und die erste Bearbeitungsstellung kann, wie in Fig. 8 dargestellt, dazu eingesetzt werden, am Werkstück W2 eine Bearbeitung mit einer Ausrichtung der Werkzeugspindelachse 80 in den Ebenen E_{P} durchzuführen. Gleichzeitig besteht auch noch die Möglichkeit, die Werkzeugspindelachse 80 nicht nur parallel zu den Spindelachsen 18, 28 auszurichten, sondern auch in die Spindelachsen 18, 28 unter einem Winkel N2 schneidenden Ebenen E_{N}, wobei der Winkel N2 zwischen 0° und ungefähr 45° liegt. Dabei bezieht sich die Angabe für den Neigungswinkel N2 auf den jeweils kleinsten Winkel zwischen der jeweiligen Ebene E_{N} und den Spindelachsen 18, 28, so daß damit auch bei Betrachtung des Winkels in nur einer Richtung Winkel von ungefähr 315° bis 360° erfaßt sind.

Dabei erfolgt das Verschwenken des Werkzeugspindelträgers 72 um die Schwenkachse 74 vorzugsweise mittels der numerischen Steuerung 50, welche einen Antrieb 94 ansteuert, der einerseits zum Drehen des rotierenden Werkzeugs FW und andererseits zum Verschwenken des Werkzeugspindelträgers 72 einsetzbar ist, dabei bleibt vorzugsweise die Verbindung zwischen der Werkzeugspindel 78 und dem Antrieb 94 ständig bestehen.

Ferner erfolgt ein Festlegen des Werkzeugspindelträgers 72 in der jeweiligen Bearbeitungsstellung um die Schwenkachse 74 mittels der als Ganzes mit 92 bezeichneten und als HIRTH-Verzahnung ausgebildeten Fixiereinrichtung, welche zwischen dem .Lagergehäuse 70 und dem Werkzeugspindelträger 72 zum formschlüssigen Festlegen derselben wirksam ist.

Gleichzeitig kann mit der HIRTH-Verzahnung 92 auch eine Kupplung zum Ankuppeln der Schwenkbewegung des Werkzeugspindelträgers an den Drehantrieb für das rotierend angetriebene Werkzeug FW gekoppelt sein, so daß trotz der ständig bestehenden Kopplung des Antriebs 94 mit dem rotierenden Werkzeug FW dieser Antrieb 94 auch zum Verschwenken des Werkzeugspindelträgers 72 um die Schwenkachse 74 möglich ist. Eine derartige Kopplung ist in der europäischen Patentschrift 0 538 515 im Zusammenhang mit dem Drehantrieb für einen Revolver mit rotierend antreibbaren Werkzeugen beschrieben, so daß diesbezüglich vollinhaltlich auf die Offenbarung in dieser Druckschrift Bezug genommen wird.

Im einfachsten Fall erfolgt beim Wechsel von einer Bearbeitung des Werkstücks W1 in der ersten Werkstückspindel 16 zur Bearbeitung des Werkstücks W2 in der zweiten Werkstückspindel 26 ein Schwenken des Werkzeugspindelträgers 72 um 180°, wobei dann, wenn die Mittelebene M parallel zu den Spindelachsen 18 und 28 verläuft, nach der Schwenkbewegung die Werkzeugspindelachse 80 stets senkrecht zur jeweiligen Spindelachse 18 oder 28 verläuft.

Vorzugsweise ist dabei das Werkzeugspindelgehäuse 76 so relativ zum Werkzeugspindelträger 72 angeordnet, daß es mit dem rückwärtigen Gehäuseabschnitt 90 sich auf einer Seite des Werkzeugspindelträgers 72 erstreckt, und zwar auf der den Spindelachsen 18, 28 abgewandten Seite und mit dem vorderen Gehäuseabschnitt 88 den Spindelachsen 18, 28 zugewandt ist.

Der hintere Gehäuseabschnitt 90 liegt in der jeweiligen Stellung seitlich neben dem Lagergehäuse 70, wodurch es erforderlich ist, daß die Erstreckung des Werkzeugspindelträgers 72 in radialer Richtung zur Schwenkachse 74 eine ausreichende Größe aufweist, so daß keine Kollision des rückwärtigen Abschnitts 92 des Werkzeugspindelgehäuses 76 mit dem Lagergehäuse 70 erfolgt und daß der maximale Schwenkwinkel kleiner als 270° ist.

Die HIRTH-Verzahnung ermöglicht außerdem, wie in Fig. 5 und 6 dargestellt, nicht nur die Festlegung des Werkzeugspindelträgers 72 in zwei um 180° zueinander gedrehte Bearbeitungsstellungen, in welchen jeweils eine in der Ebene E1 liegende Verbindungslinie 96 zwischen der Schwenkachse 74 und der Werkzeugspindelachse 80 parallel zu den Spindelachsen 18 oder 28 verläuft, wie in Fig. 5 dargestellt, sondern auch in weitere Bearbeitungsstellungen, wie in Fig. 6 dargestellt, so daß verschiedene Stellungen des rotierenden Werkzeugs FW insgesamt auf einem Kreisbogen 98 um die Schwenkachse 74 herum wählbar sind.

Dabei besteht insbesondere die Möglichkeit, das rotierende Werkzeug FW gegenüber der Schwenkachse 74 in Y-Richtung um einen frei wählbaren Wert ΔY zu verlagern, welcher den Wert 0 und maximal einen dem radialen Abstand der Werkzeugspindelachse 80 von der Schwenkachse 74 entsprechenden Wert aufweist. Eine derartige Möglichkeit der Verlagerung des rotierenden Werkzeugs FW in Y-Richtung um den Betrag ΔY schafft wiederum die Möglichkeit, das Lagergehäuse 70 mit möglichst geringer Ausladung relativ zum X-Schlitten 58 mittels des als Y-Schlitten dienenden zylindrischen Körpers 66 zu positionieren und somit durch möglichst geringe Ausladung des sich von dem Lagergehäuse 70 zum X-Schlitten 58 erstreckenden Abschnitts des zylindrischen Körpers 66 eine möglichst große Stabilität bei Fräsbearbeitungen zu erhalten, insbesondere dann, wenn diese unter Einsatz einer Vorschubbewegung in Y-Richtung durch Relativbewegung des zylindrischen Körpers 66 relativ zum X-Schlitten 58 erfolgen soll.

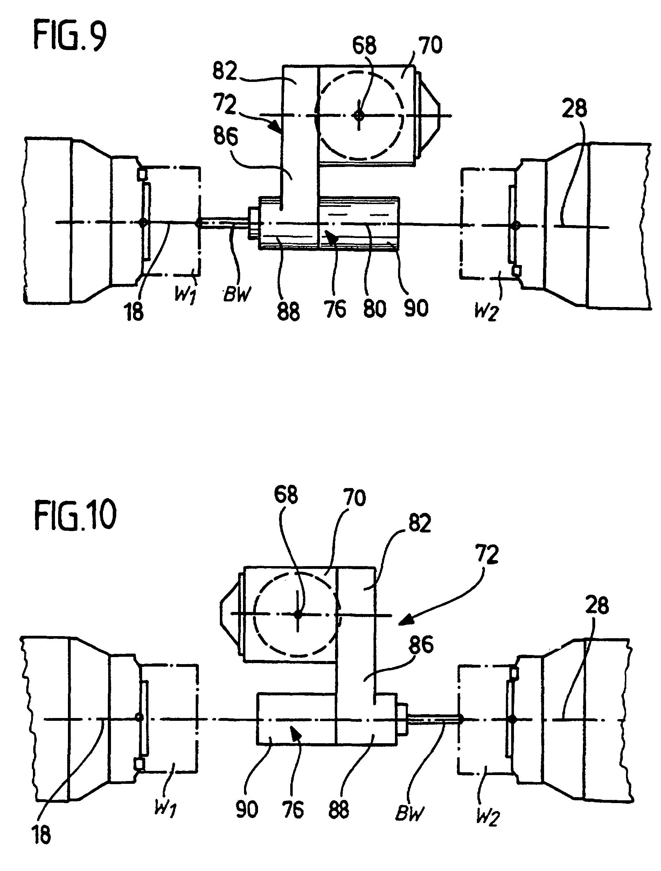

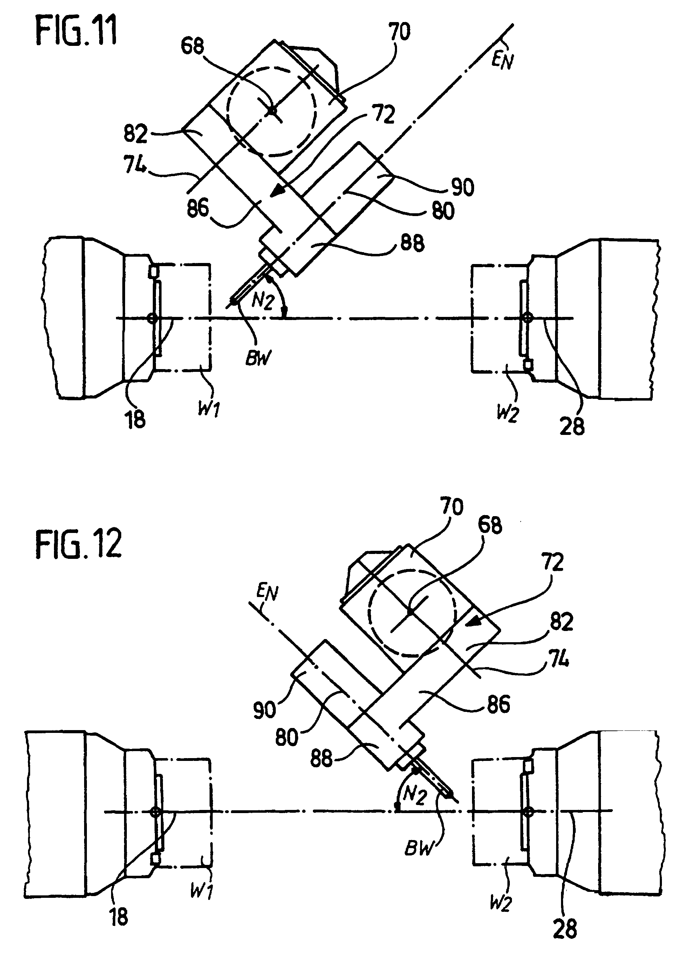

Bei allen Varianten des ersten Ausführungsbeispiels ist anstelle des Fräsers FW als rotierendes Werkzeug auch ein Bohrer BW als rotierendes Werkzeug einsetzbar, mit welchem, wie in Fig. 9 bis 12 dargestellt, entweder Bohrungen in den Werkstücken W1 und W2 parallel zu den Spindelachsen 18, 28 einbringbar sind (Fig. 9 und 10) oder in beliebigen Winkeln N₁, N₂ zu den Spindelachsen 18, 28 (Fig. 11 und 12), wobei die Winkel N₁ zwischen ungefähr 90° und ungefähr 45° und die Winkel N₂ zwischen ungefähr 0 und ungefähr 45° variieren. Der Wechsel vom Einsatz des Bohrers BW im Werkstück W1 zum Werkstück W2 erfolgt, wie in Fig. 9 und 10 sowie Fig. 11 und 12 dargestellt, ebenfalls durch Drehen des Lagergehäuses 70 um die B-Achse, d. h. im Fall des ersten Ausführungsbeispiels um die Zylinderachse 68 des zylindrischen Körpers 66 unter gleichzeitigem Verschwenken des Werkzeugspindelträgers 72 um die Schwenkachse 74, im einfachsten Fall um 180°, wobei aber auch beliebige andere Winkel, beispielsweise um einen Versatz, um die Strecke ΔY zu erzeugen, möglich sind.

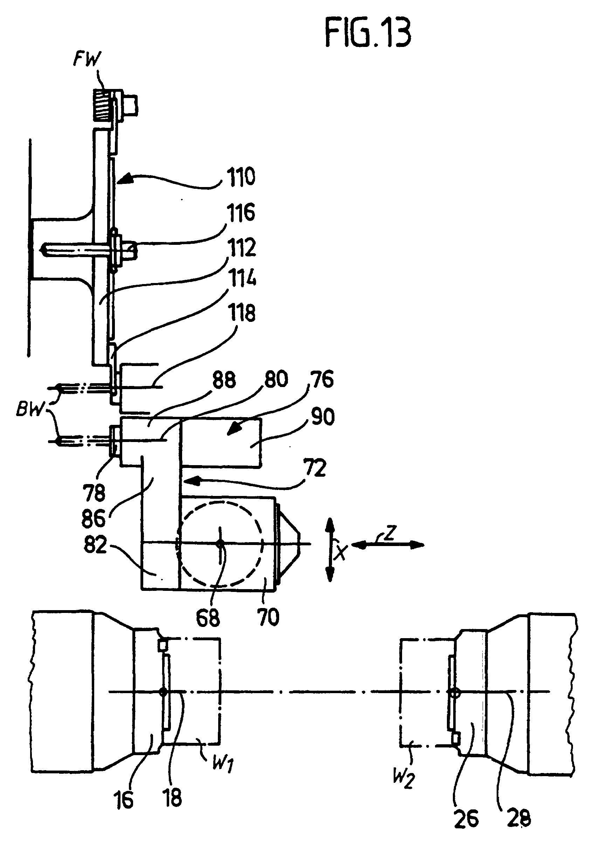

Besonders günstig läßt sich ein Wechsel zwischen dem Bohrer BW als rotierendem Werkzeug und dem Fräser FW dadurch durchführen, daß die Drehmaschine noch mit einem Werkzeugmagazin 110 versehen ist, welches beispielsweise eine Scheibe 112 mit Halterungen 114 aufweist, die um eine Achse 116 drehbar ist, welche in dem in Fig. 13 dargestellten Fall parallel zu den Spindelachsen 18, 28 verläuft, wobei aber auch beliebige Schräglagen der Achse 116 relativ zu den Spindelachsen 18, 28 realisierbar sind. Die Scheibe 112 ist dabei beispielsweise so drehbar, daß das jeweils der Werkzeugspindel 78 nächstliegende Werkzeug BW entnehmbar ist, wobei beispielsweise ein Einführen eines Schafts des jeweiligen Werkzeugs BW in die Werkzeugspindel 78 durch ein Verschieben der Werkzeugspindel 78 in Richtung der Werkzeugspindelachse 80 erfolgt. Dies kann beispielsweise durch eine Bewegung des Lagergehäuses 70 mit dem Werkzeugspindelträger 72 in Z-Richtung erfolgen, wenn die Werkzeuge BW oder FW in dem Magazin 110 so gehalten sind, daß das der Werkzeugspindel nächstliegende jeweilige Werkzeug sich mit seiner Längsachse 118 parallel zur Z-Achse erstreckt. In diesem Fall erfolgt ein Drehen des Lagergehäuses 70 dergestalt, daß die Werkzeugspindelachse 80 parallel zu der Werkzeugachse 118 verläuft und eine koaxiale Ausrichtung durch Bewegen des Lagergehäuses 70 noch zusätzlich in X-Richtung, so daß durch Verschieben in der Z-Richtung ein Einführen des Schafts des jeweiligen Werkzeugs in die Werkzeugspindel 78 oder ein Herausziehen des Schafts aus der Werkzeugspindel 78 möglich ist.

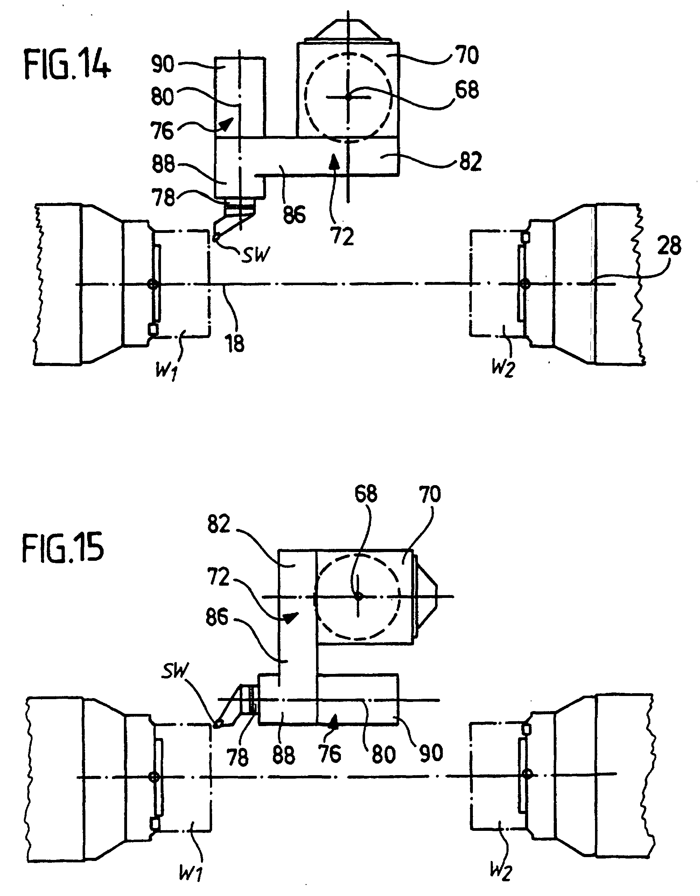

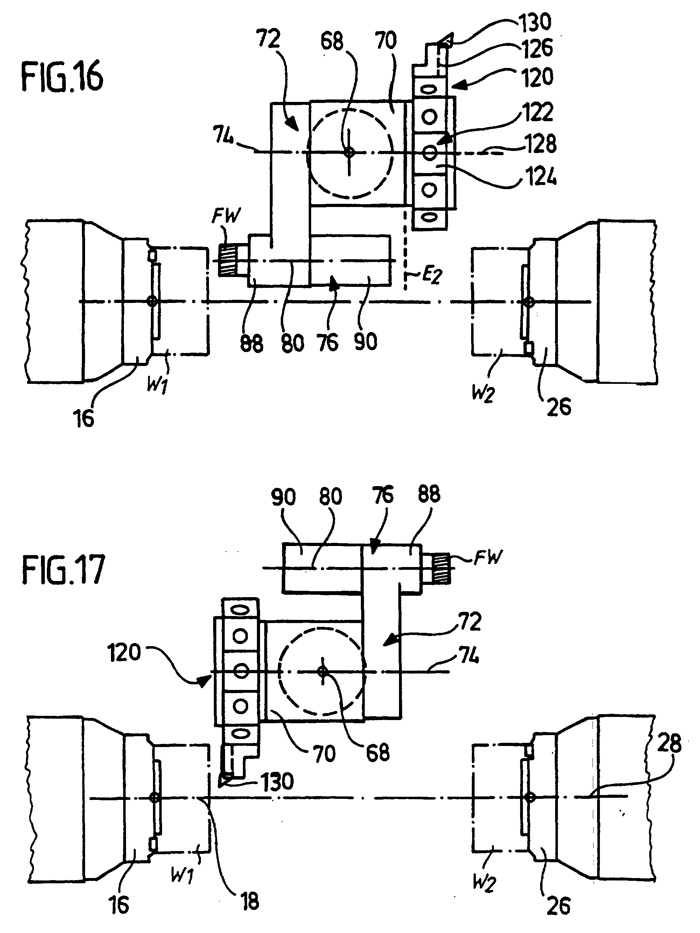

Bei allen Varianten des ersten Ausführungsbeispiels können, wie in den Figuren 14 und 15 dargestellt, auch feststehende Werkzeuge SW in die Werkzeugspindel 78 eingesetzt werden und durch Stillsetzen der Werkzeugspindel 78 mittels ihres Antriebs in einer definierten Stellung relativ zum jeweils zu bearbeitenden Werkstück, in diesem Fall zum Werkstück W1, positioniert werden, so daß beispielsweise ein Werkzeug SW einsetzbar ist, mit dem sowohl stirnseitige als auch mantelseitige Bearbeitungen des Werkstücks W1 möglich sind, wobei jeweils die Werkzeugspindelachse 80 entweder parallel oder senkrecht oder in beliebigen Zwischenstellungen definiert zur jeweiligen Spindelachse 18 oder 28 auszurichten ist.

Bei einem zweiten Ausführungsbeispiel, dargestellt in Fig. 16 und 17, ist zusätzlich an dem Lagerkörper 70 auf der dem Werkzeugspindelträger 72 gegenüberliegenden Seite ein Revolver 120 angeordnet, welcher beispielsweise als Trommelrevolver ausgebildet ist und im Bereich seines Umfangs 122 Aufspannflächen 124 für Werkzeughalter 126 aufweist.

Der Revolver 120 ist dabei vorzugsweise um eine Revolverschaltachse 128 drehbar, welche im einfachsten Fall koaxial zur Schwenkachse 74 des Werkzeugspindelträgers 72 verläuft.

Ferner ist bei diesem Ausführungsbeispiel der hintere Gehäuseabschnitt 90 des Werkzeugspindelgehäuses 76 so ausgebildet, daß dieser sich von dem Werkzeugspindelträger 72 ausgehend maximal bis zu einer Ebene E2 erstreckt, welche eine Trennebene zwischen dem Revolver 120 und dem Lagergehäuse 70 darstellt.

Bei dieser Lösung besteht die Möglichkeit, das rotierend angetriebene Werkzeug FW so, wie bei dem ersten Ausführungsbeispiel beschrieben, einzusetzen, wobei die Werkzeugspindelachse 80 in den Ebenen E_{S}, E_{N} oder E_{P} liegt und entsprechend relativ zu den Spindelachsen 18 oder 28 verläuft, wie in Fig. 3 und 4 dargestellt oder wie in Fig. 7 und 8 dargestellt. Bei paralleler Ausrichtung der Werkzeugspindelachse 80 zu den Spindelachsen 18, 28 besteht außerdem noch die Möglichkeit, entweder gleichzeitig mit dem rotierenden Werkzeug FW oder abwechselnd ein Werkzeug 130 des Revolvers 120 zur Bearbeitung des Werkstücks W1 oder des Werkstücks W2 einzusetzen, während bei Bearbeitung mit senkrecht zu den Spindelachsen 18, 28 stehender Werkzeugspindelachse 80 der Revolver 120 nicht gleichzeitig einsetzbar ist, sondern auf der den Spindelachsen 18, 28 abgewandten Seite des Lagergehäuses 70 steht.

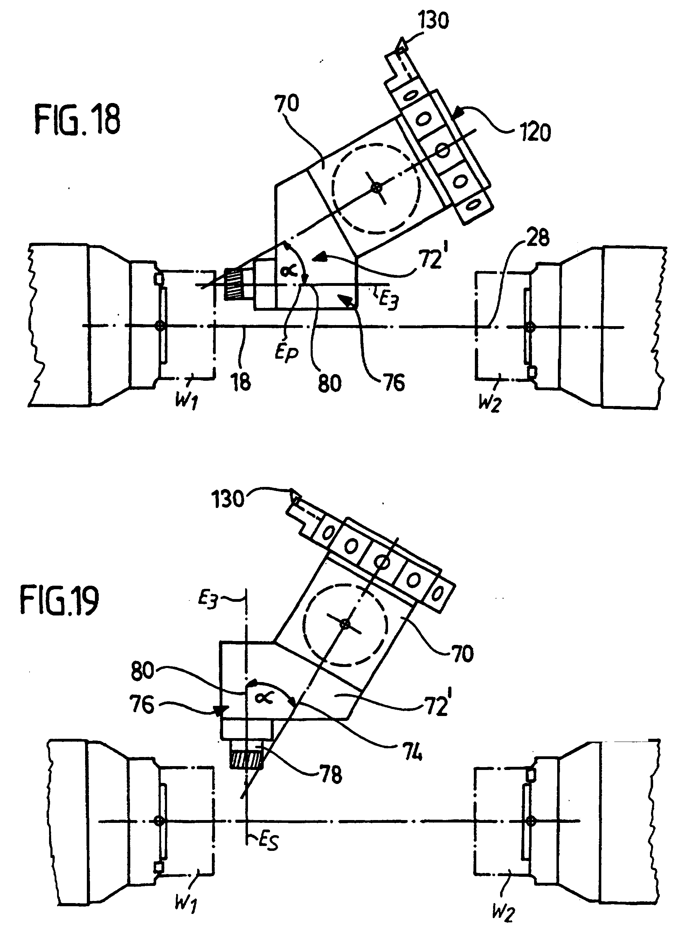

Bei einem dritten Ausführungsbeispiel, dargestellt in Fig. 18 bis 20, ist der Werkzeugspindelträger 72' so ausgebildet und an diesem das Werkzeugspindelgehäuse 76 so angeordnet, daß die Werkzeugspindelachse 80 der Werkzeugspindel 78 in einer Ebene E₃ liegt, die in einem Winkel α zur Schwenkachse 74 geneigt verläuft, welcher kleiner als 90°, jedoch größer als 0°, ist und die Schwenkachse 74 schneidet. Beispielsweise beträgt der Winkel α 45° oder auch 30°. Zweckmäßigerweise liegen dabei die Schwenkachse 74 und die Werkzeugspindelachse 80 gemeinsam in der Ebene E₁, welche der Zeichnungsebene entspricht.

Diese Lösung hat den Vorteil, daß unabhängig davon, ob eine Bearbeitung des Werkstücks W1 mit in den Ebenen E_{S}, E_{N} oder E_{P} verlaufender Werkzeugspindelachse 80 erfolgt, stets der Revolver 120 so weit abgewandt ist, daß Kollisionen zwischen den Werkzeugen 130 desselben und dem Werkstück W2 vermieden werden können, so daß problemlos eine Bearbeitung des Werkstücks W2 beispielsweise mit Werkzeugen des Revolvers 44 erfolgen kann, da in allen Fällen die Werkzeuge 130 stets in einem Abstand von der Spindelachse 28 stehen, der größer ist als der Radius des Werkstücks W2.

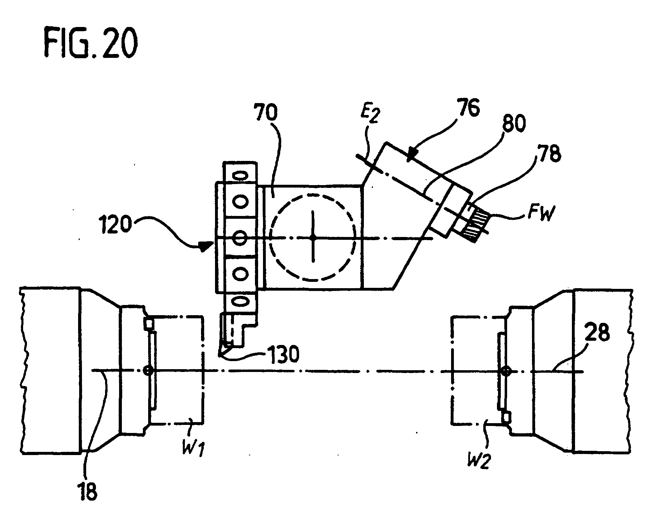

Erfolgt dabei bei diesem Ausführungsbeispiel, wie in Fig. 20 dargestellt, eine Bearbeitung beispielsweise des Werkstücks W1 mit dem Werkzeug 130 des Revolvers 120, so ist durch geeignetes Drehen des Lagerkörpers 70 die Werkzeugspindelachse 80 mit der Werkzeugspindel 78 stets so positionierbar, daß auch das Werkzeug FW einen Abstand von der Spindelachse 28 aufweist, der größer ist als der Radius des Werkstücks W2, so daß auch in diesem Fall Kollisionen zwischen dem Werkzeug FW und dem Werkstück W2 vermieden werden können und ebenfalls bei einer Bearbeitung des Werkstücks W2 beispielsweise mittels eines Werkzeugs des Revolvers 44 Kollisionen mit dem Werkzeug FW nicht auftreten können.

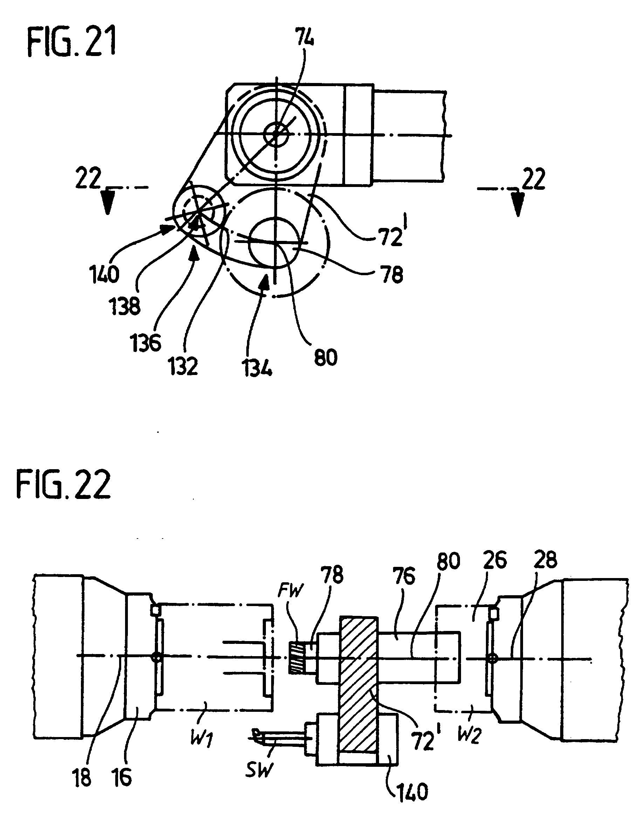

Bei einem vierten Ausführungsbeispiel einer erfindungsgemäßen Drehmaschine ist, wie in Fig. 21 und 22 dargestellt, der Werkzeugspindelträger 72 nicht als sich von der Schwenkachse 74 ausschließlich in Richtung der Werkzeugspindelachse 80 erstreckender Arm vorgesehen, sondern als Mehrfachwerkzeugträger, bei welchem beispielsweise auf einem Kreisbogen 132 um die Schwenkachse 74 herum sowie in radialem Abstand zu diesem mehrere Werkzeugpositionen 134 und 136 angeordnet sind.

Beispielsweise ist in der Werkzeugposition 134 eine Werkzeugspindel 78 vorgesehen, während in der Werkzeugposition 136 eine Aufnahme für ein feststehendes Werkzeug SW vorgesehen ist, das beispielsweise mittels eines Halters 140 an dem Werkzeugspindelträger 72' fixierbar ist, und zwar in einer Position, die bezüglich der Schwenkachse 74 in einem Winkelabstand von der Werkzeugspindelachse 80 steht.

## Patentansprüche

1. Werkzeugmaschine umfassend ein Maschinengestell (10), mindestens eine um eine Achse (18) drehbare und in einer definierten Drehstellung feststellbare Werkstückaufnahme (16), in welcher ein Werkstück (W) zur Bearbeitung aufnehmbar ist, eine Werkzeugträgeranordnung (70, 72), mit einem mittels einer Steuerung (50) quer zu der Achse (18) und in Richtung der Achse (18) bewegbaren sowie um eine B-Achse schwenkbaren Lagergehäuse (70), an weichem ein um eine quer zur B-Achse verlaufende Schwenkachse (74) gegenüber dem Lagergehäuse (70) verschwenkbarer und in mindestens einer Bearbeitungsstellung am Lagergehäuse (70) festlegbarer Werkzeugspindelträger (72) angeordnet ist, der sich nur auf einer Seite der Schwenkachse (74) in einem Winkelbereich von weniger als 180° um die Schwenkachse (74) herum und von dieser weg erstreckt und an dem eine Werkzeugspindel (78) zur Aufnahme eines um eine Werkzeugspindelachse (80) rotierend angetriebenen Werkzeugs (FW, BW) so angeordnet ist, daß die Werkzeugspindelachse (80) in einer mit der Schwenkachse (74) nicht koaxialen Stellung steht,
**dadurch gekennzeichnet, daß** die Werkzeugspindetachse (80) durch Verschwenken des Werkzeugspindeiträgers (72) mittels der Steuerung (50) um die Schwenkachse (74) in mindestens eine erste und eine zweite Bearbeitungsstellung verlagerbar ist, die auf einander gegenüberliegenden Seiten einer durch die Schwenkachse (74) verlaufenden Ebene (S) liegen, und daß das Werkzeug (FB, BW) mittels der Steuerung (50) durch Drehung um die B-Achse im Raum so ausrichtbar ist, daß die Werkzeugspindelachse (80) in die Achse (18) schneidenden und mit dieser Achse (18) einen Winkel im Bereich von ungefähr 0° bis ungefähr 90° einschließenden Ebenen (E) positionierbar ist, wobei die Werkzeugspindelachse (80) zur Bearbeitung des Werkstücks (W) in der ersten Bearbeitungsstellung durch Drehung um die B-Achse in den die Achse (18) senkrecht schneidenden Ebenen (E_{S}) und in die Achse (18) mit einem Neigungswinkel (N1) schneidenden Ebenen (E_{N}) positionierbar ist und wobei die Werkzeugspindelachse (80) zur Bearbeitung des Werkstücks (W) in der zweiten Bearbeitungsstellung durch Drehung um die B-Achse in den parallel zur Achse (18) verlaufenden Ebenen (E_{P}) und den die Achse (18) in einem Neigungswinkel (N1) schneidenden Ebenen (E_{N}) positionierbar ist.

2. Werkzeugmaschine nach Anspruch 1, **dadurch gekennzeichnet, daß** der Werkzeugspindelträger (72) innerhalb eines Winkelbereichs von weniger als 120° um die Schwenkachse (74) liegt.

3. Werkzeugmaschine nach Anspruch 2, **dadurch gekennzeichnet, daß** der Werkzeugspindelträger (72) innerhalb eines Winkelbereichs von weniger als 90° um die Schwenkachse herum liegt.

4. Werkzeugmaschine nach einem der voranstehenden Ansprüche, **dadurch gekennzeichnet, daß** der Werkzeugspindelträger (72) ein die Werkzeugspindel (78) lagerndes Werkzeugspindelgehäuse (76) umfaßt, welches ein integraler Abschnitt des Werkzeugspindelträgers (72) ist.

5. Werkzeugmaschine nach einem der voranstehenden Ansprüche, **dadurch gekennzeichnet, daß** der Werkzeugspindelträger (72) einen von der Schwenkachse (74) durchsetzten Lagerkopf (82), einen sich von dem Lagerkopf (82) weg erstreckenden Arm (86) und ein mit dem Arm verbundenes Werkzeugspindelgehäuse (76) umfaßt.

6. Werkzeugmaschine nach Anspruch 5, **dadurch gekennzeichnet, daß** der Arm (86) des Werkzeugspindelträgers (72) sich ausschließlich zwischen dem Werkzeugspindelgehäuse (76) und dem Lagerkopf (82) erstreckt.

7. Werkzeugmaschine nach einem der voranstehenden Ansprüche, **dadurch gekennzeichnet, daß** die mindestens zwei Bearbeitungsstellungen um ungefähr 180° gegeneinander um die Schwenkachse (74) verdreht angeordnet sind.

8. Werkzeugmaschine nach einem der voranstehenden Ansprüche, **dadurch gekennzeichnet, daß** der Werkzeugspindelträger (72) um weniger als eine Umdrehung um die Schwenkachse (74) schwenkbar ist.

9. Werkzeugmaschine nach einem der voranstehenden Ansprüche, **dadurch gekennzeichnet, daß** der Werkzeugspindelträger (72) um die Schwenkachse (74) um einen Winkel von maximal ungefähr 270° schwenkbar ist.

10. Werkzeugmaschine nach einem der voranstehenden Ansprüche, **dadurch gekennzeichnet, daß** der Werkzeugspindelträger (72) mit einer Fixiereinrichtung (92) am Lagergehäuse (70) festlegbar ist.

11. Werkzeugmaschine nach Anspruch 10, **dadurch gekennzeichnet, daß** mit der Fixiereinrichtung (92) der Werkzeugspindelträger (72) formschlüssig am Lagergehäuse (80) festlegbar ist.

12. Werkzeugmaschine nach Anspruch 11, **dadurch gekennzeichnet, daß** die Fixiereinrichtung (92) ineinandergreifende Verzahnungen umfaßt.

13. Werkzeugmaschine nach einem der voranstehenden Ansprüche, **dadurch gekennzeichnet, daß** die Werkzeugspindelachse (80) in einer Ebene (E₃) liegt, welche die Schwenkachse (74) in einem Winkel von weniger als 90° schneidet.

14. Werkzeugmaschine nach Anspruch 13, **dadurch gekennzeichnet, daß** die Werkzeugspindelachse (80) In einer Ebene (E₃) liegt, welche die Schwenkachse (74) in einem Winkel von ungefähr 45° oder weniger als 45° schneidet.

15. Werkzeugmaschine nach einem der voranstehenden Ansprüche, **dadurch gekennzeichnet, daß** die Werkzeugspindelachse (80) und die Schwenkachse (74) gemeinsam eine Ebene (E₁) aufspannen.

16. Werkzeugmaschine nach einem der voranstehenden Ansprüche, **dadurch gekennzeichnet, daß** sich der Werkzeugspindelträger (72) seitlich neben der B-Achse (68) erstreckt.

17. Werkzeugmaschine nach einem der voranstehenden Ansprüche, **dadurch gekennzeichnet, daß** der Werkzeugspindelträger (72) neben einer Seitenwand (83) des Lagergehäuses (70) liegt.

18. Werkzeugmaschine nach einem der voranstehenden Ansprüche, **dadurch gekennzeichnet, daß** sich der Werkzeugspindelträger (72) in allen Schwenkstellungen in einer senkrecht zur Schwenkachse (74) liegenden Ebene (M) erstreckt.

19. Werkzeugmaschine nach Anspruch 18, **dadurch gekennzeichnet, daß** die Ebene (M) parallel zur B-Achse (68) verläuft.

20. Werkzeugmaschine nach einem der voranstehenden Ansprüche, **dadurch gekennzeichnet, daß** die Werkzeugträgeranordnung (70, 72) in Richtung einer Y-Achse bewegbar ist.

21. Werkzeugmaschine nach Anspruch 20, **dadurch gekennzeichnet, daß** die Werkzeugträgeranordnung (70, 72) linear in Richtung der Y-Achse bewegbar ist.

22. Werkzeugmaschine nach Anspruch 21, **dadurch gekennzeichnet, daß** die Werkzeugträgeranordnung (70, 72) mittels eines Schlittens (66) linear in der Y-Richtung bewegbar ist.

23. Werkzeugmaschine nach Anspruch 22, **dadurch gekennzeichnet, daß** ein mit seiner Längsachse (68) sich parallel zur B-Achse erstreckender Arm (66) den in Y-Richtung bewegbaren Schlitten bildet.

24. Werkzeugmaschine nach Anspruch 23, **dadurch gekennzeichnet, daß** die Längsachse (68) des Arms (66) die Drehachse für die B-Achse bildet.

25. Werkzeugmaschine nach einem der Ansprüche 22 bis 24, **dadurch gekennzeichnet, daß** der Arm (66) das Lagergehäuse (70) trägt.

26. Werkzeugmaschine nach einem der voranstehenden Ansprüche, **dadurch gekennzeichnet, daß** die Werkzeugträgeranordnung (70, 72) in Richtung einer Z-Achse bewegbar ist.

27. Werkzeugmaschine nach Anspruch 26, **dadurch gekennzeichnet, daß** die Werkzeugträgeranordnung (70, 72) linear in der Z-Richtung bewegbar ist.

28. Werkzeugmaschine nach einem der voranstehenden Ansprüche, **dadurch gekennzeichnet, daß** die Werkzeugträgeranordnung (70, 72) in Richtung einer X-Achse bewegbar ist.

29. Werkzeugmaschine nach Anspruch 28, **dadurch gekennzeichnet, daß** die Werkzeugträgeranordnung (70, 72) linear in Richtung der X-Achse bewegbar ist.

30. Werkzeugmaschine nach einem der voranstehenden Ansprüche, **dadurch gekennzeichnet, daß** die Werkstückaufnahme als Werkstückspindel (16, 26) ausgebildet ist und daß die Werkstückspindel (16, 26) in bestimmten Drehstellungen festlegbar ist.

31. Werkzeugmaschine nach einem der voranstehenden Ansprüche, **dadurch gekennzeichnet, daß** die Werkstückspindel (16, 26) mittels einer C-Achse numerisch gesteuert drehbar ist.

32. Werkzeugmaschine nach einem der Ansprüche 30 und 31, **dadurch gekennzeichnet, daß** an dem Lagergehäuse (70) ein zusätzlicher Werkzeugträger (120) angeordnet ist.

33. Werkzeugmaschine nach Anspruch 32, **dadurch gekennzeichnet, daß** der zusätzliche Werkzeugträger (120) auf einer dem Werkzeugspindelträger (72) gegenüberliegenden Seite des Lagergehäuses (70) angeordnet ist.

34. Werkzeugmaschine nach Anspruch 32 oder 33, **dadurch gekennzeichnet, daß** der zusätzliche Werkzeugträger (120) um eine Schwenkachse (128) schwenkbar ist.

35. Werkzeugmaschine nach Anspruch 34, **dadurch gekennzeichnet, daß** die Schwenkachsen (74, 128) des Werkzeugspindelträgers (72) und des Werkzeugträgers (120) parallel zueinander verlaufen.

36. Werkzeugmaschine nach einem der Ansprüche 32 bis 35, **dadurch gekennzeichnet, daß** der zusätzliche Werkzeugträger ein Werkzeugrevolver (120) ist.

## Claims

1. Machine tool comprising a machine frame (10), at least one workpiece receiving means (16) which is rotatable about an axis (18) and fixable in a defined rotary position, and in which a workpiece (W) is receivable for machining, a tool carrier arrangement (70, 72) with a bearing housing (70) movable transversely to the axis (18) and in the direction of the axis (18) and pivotable about a B-axis by means of a control (50), a tool spindle carrier (72) being arranged on the bearing housing (70) so as to be pivotable about a pivot axis (74) extending transversely to the B-axis in relation to the bearing housing (70) and fixable in at least one machining position on the bearing housing (70), the tool spindle carrier (72) extending only on one side of the pivot axis (74) in an angular range of less than 180° around the pivot axis (74) and away from it, and a tool spindle (78) being arranged on the tool spindle carrier (72) for receiving a tool (FW, BW) rotatingly driven about a tool spindle axis (80) such that the tool spindle axis (80) is in a position which is non-coaxial with the pivot axis (74),
**characterized in that** by pivoting the tool spindle carrier (72) about the pivot axis (74) by means of the control (50) the tool spindle axis (80) is transferable into at least a first machining position and a second machining position, which are located on opposite sides of a plane (S) extending through the pivot axis (74), and that the tool (FB, BW) is alignable in space by rotation about the B-axis by means of the control (50) such that the tool spindle axis (80) is positionable in planes (E) intersecting the axis (18) and forming with this axis (18) an angle in the range of approximately 0° to approximately 90°, the tool spindle axis (80) being positionable by rotation about the B-axis in the planes (E_{S}) perpendicularly intersecting the axis (18) and in the planes (E_{N}) intersecting the axis (18) at an angle of inclination (N1) for machining the workpiece (W) in the first machining position, and the tool spindle axis (80) being positionable by rotation about the B-axis in the planes (E_{P}) extending parallel to the axis (18) and the planes (E_{N}) intersecting the axis (18) at an angle of inclination (N1) for machining the workpiece (W) in the second machining position.

2. Machine tool as defined in claim 1, **characterized in that** the tool spindle carrier (72) lies within an angular range of less than 120° around the pivot axis (74).

3. Machine tool as defined in claim 2, **characterized in that** the tool spindle carrier (72) lies within an angular range of less than 90° around the pivot axis.

4. Machine tool as defined in any one of the preceding claims, **characterized in that** the tool spindle carrier (72) comprises a tool spindle housing (76) which mounts the tool spindle (78) and is an integral section of the tool spindle carrier (72).

5. Machine tool as defined in any one of the preceding claims, **characterized in that** the tool spindle carrier (72) comprises a bearing head (82) penetrated by the pivot axis (74), an arm (86) extending away from the bearing head (82), and a tool spindle housing (76) connected to the arm.

6. Machine tool as defined in claim 5, **characterized in that** the arm (86) of the tool spindle carrier (72) extends solely between the tool spindle housing (76) and the bearing head (82).

7. Machine tool as defined in any one of the preceding claims, **characterized in that** the at least two machining positions are arranged so as to be turned about the pivot axis (74) through approximately 180° in relation to one another.

8. Machine tool as defined in any one of the preceding claims, **characterized in that** the tool spindle carrier (72) is pivotable about the pivot axis (74) by less than one rotation.

9. Machine tool as defined in any one of the preceding claims, **characterized in that** the tool spindle carrier (72) is pivotable about the pivot axis (74) through an angle of at the most approximately 270°.

10. Machine tool as defined in any one of the preceding claims, **characterized in that** the tool spindle carrier (72) is fixable on the bearing housing (70) with a fixing device (92).

11. Machine tool as defined in claim 10, **characterized in that** the tool spindle carrier (72) is positively fixable on the bearing housing (70) with the fixing device (92).

12. Machine tool as defined in claim 11, **characterized in that** the fixing device (92) comprises teeth engaging in one another.

13. Machine tool as defined in any one of the preceding claims, **characterized in that** the tool spindle axis (80) is located in a plane (E₃) intersecting the pivot axis (74) at an angle of less than 90°.

14. Machine tool as defined in claim 13, **characterized in that** the tool spindle axis (80) is located in a plane (E₃) intersecting the pivot axis (74) at an angle of approximately 45° or less than 45°.

15. Machine tool as defined in any one of the preceding claims, **characterized in that** the tool spindle axis (80) and the pivot axis (74) together define a plane (E₁).

16. Machine tool as defined in any one of the preceding claims, **characterized in that** the tool spindle carrier (72) extends laterally to the side of the B-axis (68).

17. Machine tool as defined in any one of the preceding claims, **characterized in that** the tool spindle carrier (72) is located to the side of a side wall (83) of the bearing housing (70).

18. Machine tool as defined in any one of the preceding claims, **characterized in that** the tool spindle carrier (72) extends in a plane (M) located at right angles to the pivot axis (74) in all the pivot positions.

19. Machine tool as defined in claim 18, **characterized in that** the plane (M) extends parallel to the B-axis (68).

20. Machine tool as defined in any one of the preceding claims, **characterized in that** the tool carrier arrangement (70, 72) is movable in the direction of a Y-axis.

21. Machine tool as defined in claim 20, **characterized in that** the tool carrier arrangement (70, 72) is movable linearly in the direction of the Y-axis.

22. Machine tool as defined in claim 21, **characterized in that** the tool carrier arrangement (70, 72) is movable linearly in the Y direction by means of a slide (66).

23. Machine tool as defined in claim 22, **characterized in that** an arm (66) extending parallel to the B-axis with its longitudinal axis (68) forms the slide movable in Y direction.

24. Machine tool as defined in claim 23, **characterized in that** the longitudinal axis (68) of the arm (66) forms the axis of rotation for the B-axis.

25. Machine tool as defined in any one of claims 22 to 24, **characterized in that** the arm (66) supports the bearing housing (70).

26. Machine tool as defined in any one of the preceding claims, **characterized in that** the tool carrier arrangement (70, 72) is movable in the direction of a Z-axis.

27. Machine tool as defined in claim 26, **characterized in that** the tool carrier arrangement (70, 72) is movable linearly in the Z direction.

28. Machine tool as defined in any one of the preceding claims, **characterized in that** the tool carrier arrangement (70, 72) is movable in the direction of an X-axis.

29. Machine tool as defined in claim 28, **characterized in that** the tool carrier arrangement (70, 72) is movable linearly in the direction of the X-axis.

30. Machine tool as defined in any one of the preceding claims, **characterized in that** the workpiece receiving means is designed as a workpiece spindle (16, 26), and that the workpiece spindle (16, 26) is fixable in specific rotary positions.

31. Machine tool as defined in any one of the preceding claims, **characterized in that** the workpiece spindle (16, 26) is rotatable in a numerically controlled manner by means of a C-axis.

32. Machine tool as defined in either one of claims 30 and 31, **characterized in that** an additional tool carrier (120) is arranged on the bearing housing (70).

33. Machine tool as defined in claim 32, **characterized in that** the additional tool carrier (120) is arranged on a side of the bearing housing (70) located opposite the tool spindle carrier (72).

34. Machine tool as defined in claim 32 or 33, **characterized in that** the additional tool carrier (120) is pivotable about a pivot axis (128).

35. Machine tool as defined in claim 34, **characterized in that** the pivot axes (74, 128) of the tool spindle carrier (72) and of the tool carrier (120) extend parallel to one another.

36. Machine tool as defined in any one of claims 32 to 35, **characterized in that** the additional tool carrier is a tool turret (120).

## Revendications

1. Machine-outil comprenant un bâti de machine (10), au moins un logement de pièce à usiner (16) pouvant tourner autour d'un axe (18) et pouvant être fixé dans une position de rotation définie, logement dans lequel une pièce (W) peut être logée en vue de son usinage, un agencement de porte-outil (70, 72) comprenant un logement de palier (70) mobile au moyen d'une commande (50) transversalement à l'axe (18) et en direction de l'axe (18) ainsi que pouvant pivoter autour d'un axe B, logement sur lequel est disposé un porte-outil à broche (72) pouvant pivoter autour d'un axe de pivotement (74) s'étendant transversalement à l'axe B par rapport au logement de palier (70) et pouvant être fixé au moins dans une position d'usinage sur le logement de palier (70), lequel porte-outil ne s'étend que sur un côté de l'axe de pivotement (74) dans une plage angulaire inférieure à 180° autour de l'axe de pivotement (74) et s'éloigne de celui-ci et sur lequel est disposé une broche d'outil (78) pour le logement d'un outil (FW, BW) entraîné de façon rotative autour d'un axe de broche d'outil (80), de telle sorte que l'axe de broche d'outil (80) ne se trouve pas dans une position coaxiale à l'axe de pivotement (74),
**caractérisée en ce que** l'axe de broche d'outil (80) peut être décalé par le pivotement du porte-outil à broche (72) au moyen de la commande (50) autour de l'axe de pivotement (74) dans au moins une première et une seconde positions d'usinage, qui se situent sur les côtés opposés l'un à l'autre d'un plan (S) s'étendant à travers l'axe de pivotement (74), et **en ce que** l'outil (FB, BW) peut être orienté dans l'espace au moyen de la commande (50) par la rotation autour de l'axe B de telle sorte que l'axe de broche d'outil (80) puisse être positionné dans les plans (E) coupant l'axe (18) et enfermant avec cet axe (18) un angle dans la plage d'approximativement 0° à approximativement 90°, l'axe de broche d'outil (80) pouvant être positionné pour l'usinage de la pièce à usiner (W) dans la première position d'usinage par la rotation autour de l'axe B dans les plans (E_{S}) coupant perpendiculairement l'axe (18) et dans les plans (E_{N}) coupant l'axe (18) avec un angle d'inclinaison (N1) et l'axe de broche d'outil (80) pour l'usinage de la pièce à usiner (W) pouvant être positionné dans la seconde position d'usinage par la rotation autour de l'axe B dans les plans (Ep) s'étendant parallèlement à l'axe (18) et dans les plans (EN) coupant l'axe (18) selon un angle d'inclinaison (N1).

2. Machine-outil selon la revendication 1, **caractérisée en ce que** le porte-outil à broche (72) est situé autour de l'axe de pivotement (74) à l'intérieur d'une plage angulaire inférieure à 120°.

3. Machine-outil selon la revendication 2, **caractérisée en ce que** le porte-outil à broche (72) est situé autour de l'axe de pivotement à l'intérieur d'une plage angulaire inférieure à 90°.

4. Machine-outil selon l'une quelconque des revendications précédentes, **caractérisée en ce que** le porte-outil à broche (72) comprend un logement de broche d'outil (76) logeant la broche d'outil (78), lequel logement constitue une section entière du porte-outil à broche (72).

5. Machine-outil selon l'une quelconque des revendications précédentes, **caractérisée en ce que** le porte-outil à broche (72) comprend une tête de palier (82) traversée par l'axe de pivotement (74), un bras (86) s'étendant à partir de la tête de palier (82) et un logement de broche d'outil (76) relié au bras.

6. Machine-outil selon la revendication 5, **caractérisée en ce que** le bras (86) du porte-outil à broche (72) s'étend exclusivement entre le logement de broche d'outil (76) et la tête de palier (82).

7. Machine-outil selon l'une quelconque des revendications précédentes, **caractérisée en ce que** les au moins deux positions d'usinage sont disposées à approximativement 180° l'une par rapport à l'autre en rotation autour de l'axe de pivotement (74).

8. Machine-outil selon l'une quelconque des revendications précédentes, **caractérisée en ce que** le porte-outil à broche (72) peut pivoter autour de l'axe de pivotement (74) sur au moins une rotation complète.

9. Machine-outil selon l'une quelconque des revendications précédentes, **caractérisée en ce que** le porte-outil à broche (72) peut pivoter autour de l'axe. de pivotement (74) sur un angle maximal d'approximativement 270°.

10. Machine-outil selon l'une quelconque des revendications précédentes, **caractérisée en ce que** le porte-outil à broche (72) peut être fixé avec un dispositif de fixation (92) sur le logement de palier (70).

11. Machine-outil selon la revendication 10, **caractérisée en ce que** le porte-outil à broche (72) peut être fixé par engagement positif avec le dispositif de fixation (92) sur le logement de palier (70).

12. Machine-outil selon la revendication 11, **caractérisée en ce que** le dispositif de fixation (92) comprend des dentures s'engageant l'une dans l'autre.

13. Machine-outil selon l'une quelconque des revendications précédentes, **caractérisée en ce que** l'axe de broche d'outil (80) est situé dans un plan (E₃), lequel coupe l'axe de pivotement (74) sur un angle inférieur à 90°.

14. Machine-outil selon la revendication 13, **caractérisée en ce que** l'axe de broche d'outil (80) est situé dans un plan (E₃), lequel coupe l'axe de pivotement (74) sur un angle d'approximativement 45° ou inférieur à 45°.

15. Machine-outil selon l'une quelconque des revendications précédentes, **caractérisée en ce que** l'axe de broche d'outil (80) et l'axe de pivotement (74) tendent ensemble un plan (E₁).

16. Machine-outil selon l'une quelconque des revendications précédentes, **caractérisée en ce que** le porte-outil à broche (72) s'étend latéralement à côté de l'axe B (68).

17. Machine-outil selon l'une quelconque des revendications précédentes, **caractérisée en ce que** le porte-outil à broche (72) est situé à côté d'une paroi latérale (83) du logement de palier (70).

18. Machine-outil selon l'une quelconque des revendications précédentes, **caractérisée en ce que** le porte-outil à broche (72) s'étend dans toutes les positions de pivotement dans un plan (M) perpendiculaire à l'axe de pivotement (74).

19. Machine-outil selon la revendication 18, **caractérisée en ce que** le plan (M) s'étend parallèlement à l'axe B (68).

20. Machine-outil selon l'une quelconque des revendications précédentes, **caractérisée en ce que** l'agencement de porte-outil (70, 72) est mobile en direction d'un axe X.

21. Machine-outil selon la revendication 20, **caractérisée en ce que** l'agencement de porte-outil (70, 72) est mobile linéairement en direction de l'axe Y.

22. Machine-outil selon la revendication 21, **caractérisée en ce que** l'agencement de porte-outil (70, 72) est mobile linéairement dans la direction Y au moyen d'un chariot (66).

23. Machine-outil selon la revendication 22, **caractérisée en ce qu'**un bras (66) s'étendant parallèlement à l'axe B avec son axe longitudinal (68) forme le chariot mobile dans la direction Y.

24. Machine-outil selon la revendication 23, **caractérisée en ce que** l'axe longitudinal (68) du bras (66) forme l'axe de rotation pour l'axe B.

25. Machine-outil selon l'une des revendications 22 à 24, **caractérisée en ce que** le bras (66) porte le logement de palier (70).

26. Machine-outil selon l'une quelconque des revendications précédentes, **caractérisée en ce que** l'agencement de porte-outil (70, 72) est mobile en direction d'un axe Z.

27. Machine-outil selon la revendication 26, **caractérisée en ce que** l'agencement de porte-outil (70, 72) est mobile linéairement dans la direction Z.

28. Machine-outil selon l'une quelconque des revendications précédentes, **caractérisée en ce que** l'agencement de porte-outil (70, 72) est mobile en direction d'un axe X.

29. Machine-outil selon la revendication 28, **caractérisée en ce que** l'agencement de porte-outil (70, 72) est mobile linéairement en direction de l'axe X.

30. Machine-outil selon l'une quelconque des revendications précédentes, **caractérisée en ce que** le logement de pièce à usiner est réalisé sous forme de broche de pièce à usiner (16, 26) et **en ce que** la broche de pièce à usiner (16, 26) peut être fixée dans certaines positions de rotation.

31. Machine-outil selon l'une quelconque des revendications précédentes, **caractérisée en ce que** la broche de pièce à usiner (16, 26) peut être tournée de façon guidée numériquement au moyen d'un axe C.

32. Machine-outil selon l'une quelconque des revendications 30 et 31, **caractérisée en ce qu'**un porte-outil (120) supplémentaire est disposé sur le logement de palier (70).

33. Machine-outil selon la revendication 32, **caractérisée en ce que** le porte-outil (120) supplémentaire est disposé sur un côté du logement de palier (70) opposé au porte-outil à broche (72).

34. Machine-outil selon la revendication 32 ou 33, **caractérisée en ce que** le porte-outil (120) supplémentaire peut pivoter autour d'un axe de pivotement (128).

35. Machine-outil selon la revendication 34, **caractérisée en ce que** les axes de pivotement (74, 128) du porte-outil à broche (72) et du porte-outil (120) s'étendent parallèlement l'un à l'autre.

36. Machine-outil selon l'une quelconque des revendications 32 à 35, **caractérisée en ce que** le porte-outil supplémentaire est une tourelle d'outil (120).
